(19)

**Europäisches Patentamt**
**European Patent Office**
**Office européen des brevets**

(11) **EP 4 405 278 B1**

(12) **EUROPEAN PATENT SPECIFICATION**

(45) Date of publication and mention
of the grant of the patent:
**29.10.2025 Bulletin 2025/44**

(21) Application number: **22777249.8**

(22) Date of filing: **20.09.2022**

(51) International Patent Classification (IPC):
**B65G 1/04** (2006.01)

(52) Cooperative Patent Classification (CPC):
**B65G 1/0464; B65G 1/0478**

(86) International application number:
**PCT/EP2022/076075**

(87) International publication number:
**WO 2023/046669 (30.03.2023 Gazette 2023/13)**

(54) **A GRID FRAMEWORK STRUCTURE**

GITTERRAHMENSTRUKTUR

STRUCTURE D'OSSATURE DE GRILLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.09.2021 GB 202113604**

(43) Date of publication of application:
**31.07.2024 Bulletin 2024/31**

(73) Proprietor: **Ocado Innovation Limited
Hatfield, Hertfordshire AL10 9UL (GB)**

(72) Inventors:
• **MCLARNEY, Nicholas
Hatfield Hertfordshire AL10 9UL (GB)**

• **MEUTH, Benjamin
Hatfield Hertfordshire AL10 9UL (GB)**
• **DURHAM, Richard
Hatfield Hertfordshire AL10 9UL (GB)**

(74) Representative: **Ocado Group IP Department
The IP Department c/o
Buildings One & Two Trident Place
Mosquito Way
Hatfield, Hertfordshire AL10 9UL (GB)**

(56) References cited:
**WO-A1-2020/074257    JP-A- 2003 160 212
JP-A- 2016 030 685**

## Description

### Field of Invention

The present invention relates to the field of remotely operated load handling devices on tracks located on a grid framework structure for handling storage containers or bins stacked in the grid framework structure, more specifically to a grid framework structure for supporting the remotely operated load handling devices.

### Background

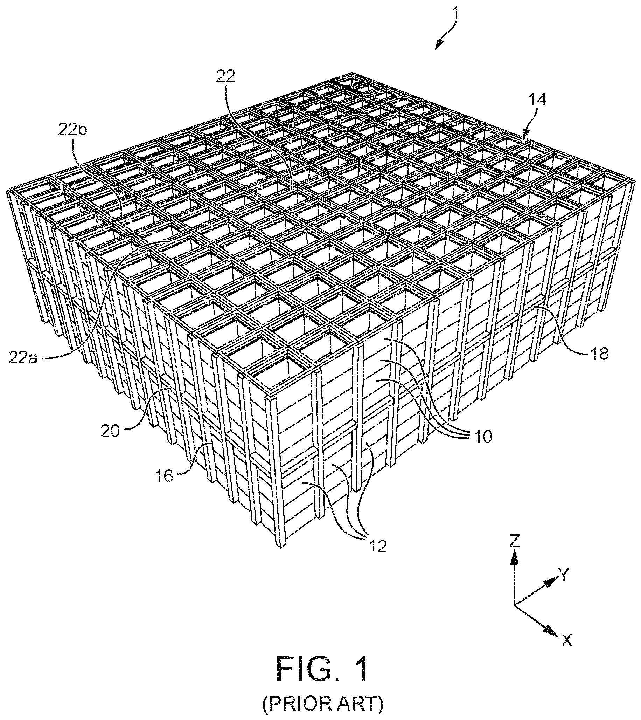

Storage and retrieval systems 1 comprising a three-dimensional storage grid framework structure, within which storage containers/bins are stacked on top of each other, are well known. PCT Publication No. WO2015/185628A (Ocado) describes a known storage and fulfilment system in which stacks of bins or containers are arranged within a grid framework structure. The bins or containers are accessed by load handling devices remotely operative on tracks located on the top of the grid framework structure. A system of this type is illustrated schematically in Figures 1 to 3 of the accompanying drawings.

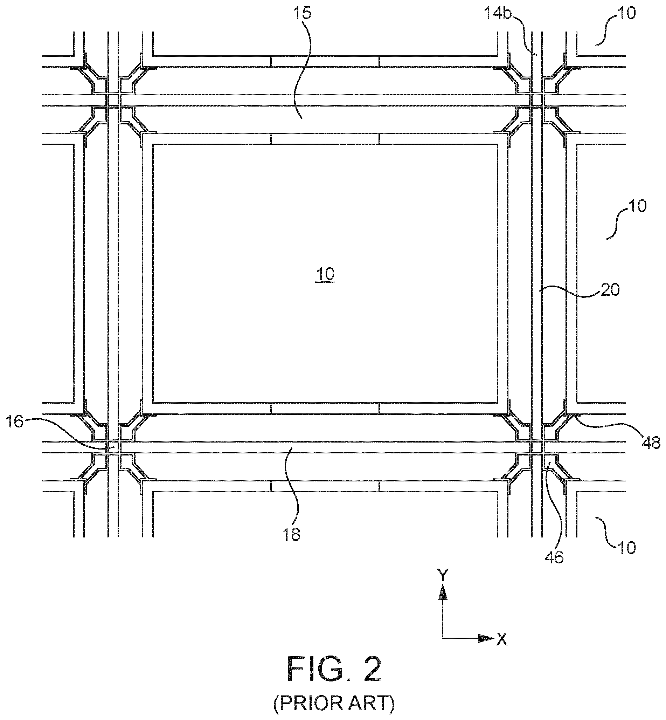

As shown in Figures 1 and 2, stackable containers, known as bins or containers 10, are stacked on top of one another to form stacks 12. The stacks 12 are arranged in a grid framework structure 14 in a warehousing or manufacturing environment. The grid framework is made up of a plurality of storage columns or grid columns. Each grid in the grid framework structure has at least one grid column for storage of a stack of containers. Figure 1 is a schematic perspective view of the grid framework structure 14, and Figure 2 is a top-down view showing a stack 12 of bins 10 arranged within the framework structure 14. Each bin 10 typically holds a plurality of product items (not shown), and the product items within a bin 10 may be identical, or may be of different product types depending on the application.

The grid framework structure 14 comprises a plurality of upright members or upright columns 16 that support horizontal members 18, 20. Each of the plurality of upright members has a cross-sectional profile comprising a hollow centre section and four corner sections, each of the four corner sections comprising two perpendicular guiding plates that extend along the longitudinal length of the upright member which cooperate with the corner of a storage container as it is guided along the upright member. The hollow centre section is preferably a box section.

The plurality of upright columns are interconnected at their top ends by the first set of parallel grid members 18 extending in the first direction and the second set of grid members 120 extending in the second direction. The first set of parallel horizontal grid members 18 is arranged perpendicularly to the second set of parallel horizontal grid members 20 to form a grid structure or grid 14b comprising a plurality of grid cells 15 and lying in a horizontal plane supported by the upright members 16. For the purpose of explanation of the present invention, the intersections where the grid members cross or intersect in the grid structure constitute nodes of the grid structure. Typically a connection plate can be used to link or join the grid members to the upright members at the intersections. For example, the connection plate is cross-shaped having four connecting portions for connecting to the ends of adjacent grid members in the grid structure. However, there are other means to interconnect the plurality grid members to the plurality of upright members within the grid structure besides the use of a cap plate. WO2018146304 (Autostore Tech AS) teaches a rail arrangement for wheeled vehicles in a storage system comprising a first set of parallel rails and a second set of parallel rails. The first and second sets of parallel rails form a grid where the second set is arranged perpendicular to the first set and intersecting the first set, thus forming a grid of parallel rails. The rails comprise a plurality of elongated elements having outer ridges and a centre ridge defining a dual track, the elongated elements further comprising an intermediate ridge-free section, and wherein intersecting elements in the X and Y directions are arranged to overlap at their respective ridge-free sections, thus defining a ridge-free crossroads.

The upright members 16 and the grid members 18, 20 are typically manufactured from metal and typically welding or bolted together or a combination of both. The bins 10 are stacked between the members 16, 18, 20 of the grid framework structure 14, so that the grid framework structure 14 guards against horizontal movement of the stacks 12 of bins 10, and guides vertical movement of the bins 10.

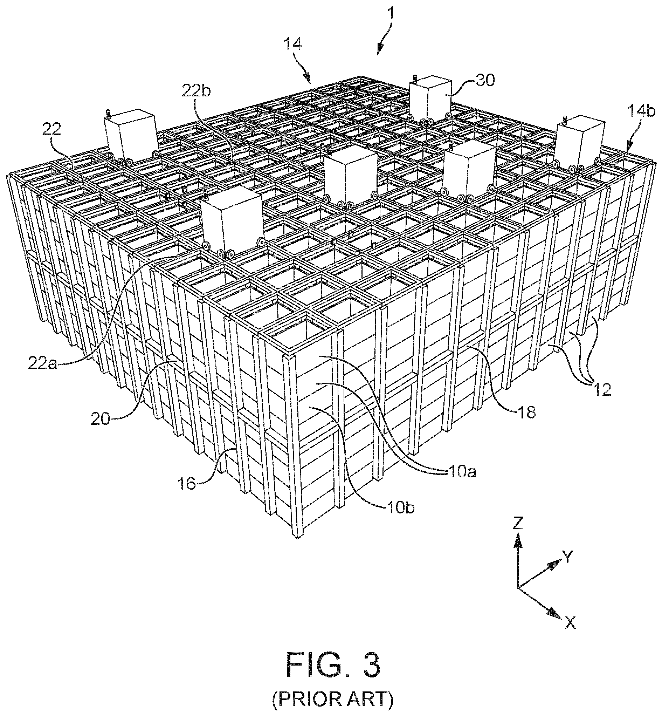

The top level of the grid framework structure 14 comprises a track system comprising rails or tracks 22 arranged in a grid pattern across the top of the stacks 12. The rails or track can be integrated into the grid members or alternatively, the track system can be formed as a separate part to the plurality of grid members, in which case the grid members function to support the track system. Referring additionally to Figure 3, the rails 22 support a plurality of load handling devices 30 to form a storage and retrieval system 1. A first set 22a of parallel rails 22 guide movement of the robotic load handling devices 30 in a first direction (for example, an X-direction) across the top of the grid framework structure 14, and a second set 22b of parallel rails 22, arranged perpendicular to the first set 22a, guide movement of the load handling devices 30 in a second direction (for example, a Y-direction), perpendicular to the first direction. In this way, the rails 22 allow movement of the robotic load handling devices 30 laterally in two dimensions in the horizontal X-Y plane, so that a load handling device 30 can be moved into position above any of the stacks 12.

The rails or tracks typically comprise an elongated element which is profiled to guide a load handling device on the grid structure and are typically profiled to provide either a single track surface so as to allow a single load handling device to travel on the track or a double track surface so as to allow two load handling devices to pass each other on the same track. In the case where the elongated element is profiled to provide a single track, the track comprises opposing lips (one lip on one side of the track and another lip at the other side of the track) along the length of the track to guide or constrain each wheel from lateral movement on the track. In the case where the profile of the elongated element is a double track, the track comprise two pairs of lips along the length of the track to allow the wheels of adjacent load handling devices to pass each other in both directions on the same track. To provide two pairs of lips, the track typically comprises a central ridge or lip and a lip either side of the central ridge. In all cases, when traversing on the grid structure, the wheels of the load handling device are constrained on both sides or faces of the wheels of the load handling device. To prevent the wheels of the load handling device derailing, the tolerances between adjacent track elements in the grid structure are very tight. To accommodate movement of the tracks as a result of temperature differences causing the tracks to expand and contract that may result in buckling or tension in the rails, one or more thermal expansion joints are incorporated within the track system for connecting regions of the track system so as to provide some relief as a result of movement of regions of the tracks.

WO2020074257 (Autostore Technology AS) relates to an expansion joint for connecting regions of a rail- based grid storage system, the expansion joint comprising a first rail element and a second rail element, the rail elements being elongate and configured to slide relative to one another in a longitudinal direction in a junction area where they overlap, the expansion joint having a profiled upper surface that defines one or more tracks for supporting container handling vehicles, the tracks extending from the first rail element through the junction area to the second rail element, wherein in the junction area, each rail element provides a portion of the or each track of the profiled upper surface so that there is a transition extending along the expansion joint from the first rail element to the second rail element for the or each track.

A known load handling device 30 shown in Figure 4 and 5 comprises a vehicle body 32 is described in PCT Patent Publication No. WO2015/019055 (Ocado), where each load handling device 30 only covers one grid space of the grid framework structure 14. Here, the load handling device 30 comprises a wheel assembly comprising a first set of wheels 34 consisting of a pair of wheels on the front of the vehicle body 32 and a pair of wheels 34 on the back of the vehicle body 32 for engaging with the first set of rails or tracks to guide movement of the device in a first direction and a second set of wheels 36 consisting of a pair of wheels 36 on each side of the vehicle 32 for engaging with the second set of rails or tracks to guide movement of the device in a second direction. Each of the sets of wheels are driven to enable movement of the vehicle in X and Y directions respectively along the rails. One or both sets of wheels can be moved vertically to lift each set of wheels clear of the respective rails, thereby allowing the vehicle to move in the desired direction.

The load handling device 30 is equipped with a lifting device or crane mechanism to lift a storage container from above. The crane mechanism comprises a winch tether or cable 38 wound on a spool or reel (not shown) and a grabber device 39. The lifting device comprises a set of lifting tethers 38 extending in a vertical direction and connected nearby or at the four corners of a lifting frame 39, otherwise known as a grabber device (one tether near each of the four corners of the grabber device) for releasable connection to a storage container 10. The grabber device 39 is configured to releasably grip the top of a storage container 10 to lift it from a stack of containers in a storage system of the type shown in Figure 1 and 2.

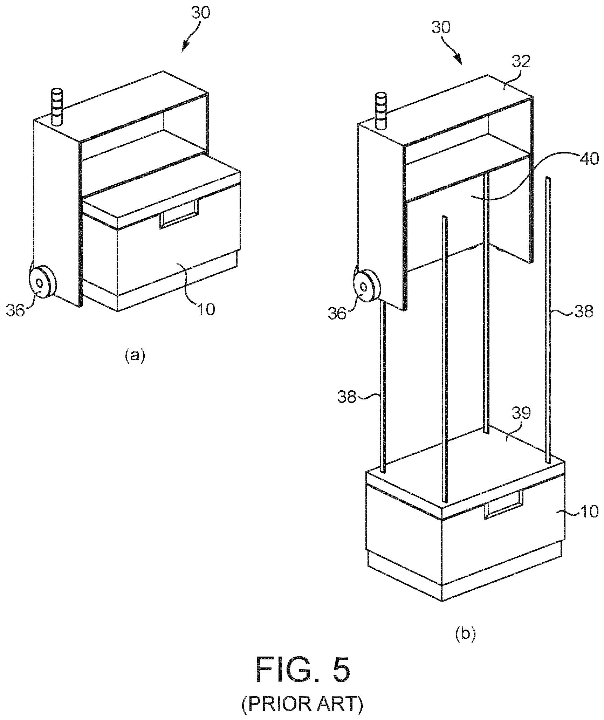

The wheels 34, 36 are arranged around the periphery of a cavity or recess, known as a container receiving space 40, in the lower part. The recess is sized to accommodate the container 10 when it is lifted by the crane mechanism, as shown in Figure 5 (a and b). When in the recess, the container is lifted clear of the rails beneath, so that the vehicle can move laterally to a different location. On reaching the target location, for example another stack, an access point in the storage system or a conveyor belt, the bin or container can be lowered from the container receiving portion and released from the grabber device. The container receiving space is not limited to the container receive space 40 being located within the vehicle body 32. The container receiving space cab be located below a cantilever such as in the case where the vehicle body of the load handling device has a cantilever construction as described in WO2019/238702 (Autostore Technology AS). For the purpose of the invention, the term 'vehicle body" is construed to optionally cover a cantilever such that the grabber device is located below the cantilever.

To access the contents of the storage containers, a majority of the grid columns are storage columns, i.e. grid columns where storage containers are stored in stacks. However, a grid structure normally has at least one grid column which is used not for storing storage containers, but which comprises a location or grid cell 15 where the load handling devices can drop off and/or pick up storage containers so that they can be transported to a second location (not shown in the prior art figures) where the storage containers can be accessed from outside of the grid or transferred out of or into the grid. Within the art, such a location or grid cell is normally referred to as a "port" and the grid column in which the port is located may be referred to as a "delivery column". The storage grids comprise two delivery columns. The first delivery column may for example comprise a dedicated drop-off port where the container handling vehicles can drop off storage containers to be transported through the delivery column and further to an access station or a transfer station, and the second delivery column may comprise a dedicated pick-up port where the container handling vehicles can pick up storage containers that have been transported through the delivery column from an access or a transfer station. Storage containers are fed into the access station and exit the access station via the first delivery column and the second delivery column respectively.

Upon receipt of a customer order, a load handling device operative to move on the tracks is instructed to pick up a storage bin containing the item of the order from a stack in the grid framework structure and transport the storage bin to a pick station via the delivery column whereupon the item can be retrieved from the storage bin. Typically, the load handling device transports the storage bin or container to a bin lift device that is integrated into the grid framework structure. A mechanism of the bin lift device lowers the storage bin or container to a pick station. At the pick station, the item is retrieved from the storage bin. Picking can done manually by hand or by a robot as taught in GB2524383 (Ocado Innovation Limited). After retrieval from the storage bin, the storage bin is transported to a second bin lift device whereupon it is lifted to grid level to a pick-up port to be retrieved by a load handling device and transported back into its location within the grid framework structure.

In order for a load handling device to drop off or pick up storage containers to and from the pick station, a separate area is provided adjacent the storage columns to accommodate the access station. Typically, the separate area is provided by incorporating a mezzanine supported by vertical beams in amongst adjacent grid framework structures. The mezzanine provides a separate area to accommodate one or more pick stations. Typically, the separate area is a tunnel with a grid framework structure either side of a tunnel. The grid structure from adjacent grid framework structures extends across the top of the mezzanine to connect to a grid structure either side of the mezzanine such that the grid structure lies in a substantially horizontal plane. One or more delivery and/or pick-up ports are assigned to one or more grid cells of the grid structure extending across the mezzanine so that a load handling device operative on the grid structure is able to drop off or pick up a storage container from the pick station below. As a result of the grid structure extending across the mezzanine, the grid structure at the top of the mezzanine tends to be shallower than the grid framework structure either side of the mezzanine, i.e. can only accommodate one or two layers of containers in a stack. The mezzanine is supported by separate vertical beams. The vertical beams supporting the mezzanine butt up against the grid framework structure either side of the mezzanine. In addition to one or more pick stations, the separate area created by the mezzanine can accommodate various other stations including but not limited to a charge station for charging the rechargeable battery powering the load handling devices on the grid, and a service station to carry out routine maintenance of the load handling device. As such stations require manual labour, one or more personnel would tend to be present below the mezzanine. These include but are not limited to pickers at the pick station, service personnel at the work stations etc.

The grid framework structure is subjected to various external and internal forces. These include but are not limited to ground movement which can be attributed to the composition of the ground or soil type, forces developed by the movement of the load handling devices on the grid framework structure which can weigh in excess of 100kg, movement as a result of nearby constructions or moving vehicles such as trains, or even during an earthquake or storm. To ensure stability of the grid framework structure, prior art storage and retrieval systems are largely dependent on various supports and bracing arranged within or at least partly along the periphery of the grid. However, the use of various supports and bracing (anti-movement braces) to stabilise the grid framework structure from internal and external forces is disadvantageous for a number of reasons. The grid framework structure occupies space or area which could be utilised by the grid to store containers, in that it prevents optimum usage of available space or area for the storage of containers. The need for a supporting structure may limit the available options for positioning of the grid framework structure since any auxiliary grid supporting structure often requires connection to a surrounding structure such as the inner walls of a building and the requirement of a supporting structure that is not cost efficient.

WO2019/101367 (Autostore Technology AS) teaches a grid supporting structure for integration in a storage grid structure of an automated storage system arranged. The grid supporting structure is made up of four storage columns interconnected by multiple vertically inclined support struts. The storage column profiles have a cross-section comprising a hollow centre section and four corner sections, each corner section comprising two perpendicular bin guiding plates for accommodating a corner of a storage bin. The support struts have a width which allows them to fit in between two parallel guiding plates so as to not compromise the ability of the storage columns to accommodate a stack of containers or storage bins.

Whilst some movement within the grid framework structure is considered acceptable so as to provide relief to the track system as a result of thermal expansion, excessive movement of the grid framework structure would not be considered acceptable as this may compromise the structural fasteners holding the grid framework structure together.

Much of the world's population is located along seismic fault lines or in the paths of powerful storms such as hurricanes and tornadoes. Locating the grid framework structure in such areas incurs risk of structural damage from seismic and storm events, as the current grid framework structure may not hold the grid structure together. Powerful seismic and storm events may result in the failure of their structural integrity e.g. as a result in the inability of the structural fasteners to keep the grid firmly attached to the upright members. Earthquakes can be labelled into four categorises labelled as Type A, B, C, or D depending on the severity of the earthquake, whereby Type A is considered the least powerful earthquake and Type D is considered the most powerful earthquake. Types A - D can be graded by their spectral acceleration, which is the maximum acceleration measured in g that an object, above ground level, will experience during an earthquake. Type D is considered to represent the most powerful seismic event and typically has a measured spectral acceleration in the region 0.5g to 1.83g (short period spectral response acceleration SDS, see https://www.fegstructural.com/seismic-design-category-101/) and is the result of most failure of buildings. As powerful seismic events act on a structure, the three dimensional dynamic forces compromise the structural fasteners holding the grid framework structure together, causing them to work their way loose or out of the members in which they are embedded or, if they remain in place, the fasteners may tear their way through a structural component.

During ground movement as a result of a seismic event, the grid framework structure has a tendency to oscillate. The oscillations of the grid framework structure can be described by transverse waves and longitudinal waves. Longitudinal waves are waves in which the displacement of the grid framework structure is in the same direction as the ground movement, and transverse wave oscillations are perpendicular to the ground movement. In either case, the amplitude of oscillation of the grid framework structure is very much dependent on the extent of the ground movement, which in turn is dependent on the category of the earthquake. For a category D type earthquake, the amplitude of the oscillation is far greater than for a category A type earthquake. Since the upright members of the grid framework structures are interconnected at their upper ends by the plurality of grid members extending in the first and second directions, bending moments may develop as a result of the movement of the grid framework structure being concentrated at the joints where the grid members cross or intersect at the vertical upright members. Whilst the thermal expansion joint provides some relief of the movement of the track system so as to avoid the load handling devices derailing, this cannot be said where the movement of the track system is excessive to cause the structural fasteners at the interconnections to loosen or in a worst case scenario break apart, i.e. during a seismic event. Not only are the structural fasteners interconnecting the grid members together subject to the bending moments as a result of ground movement, but also the other structural fasteners connecting the grid members together and/or the bracing members supporting the upright members are subject to the excessive forces. The forces experienced at the interconnections are exacerbated for taller grid framework structures as a result of the amplitude of oscillation of the grid framework structure.

Individual containers may be stacked in vertical layers, and their locations in the grid framework structure or "hive" may be indicated using co-ordinates in three dimensions to represent the load handling device or a container's position and a container depth (e.g. container at (X, Y, Z), depth W). Equally, locations in the grid framework structure may be indicated in two dimensions to represent the load handling device or a container's position and a container depth (e.g. container depth (e.g. container at (X, Y), depth Z). For example, Z=1 identifies the uppermost layer of the grid, i.e. the layer immediately below the rail system, Z=2 is the second layer below the rail system and so on to the lowermost, bottom layer of the grid. The depth Z can be as high as 21 levels, and considering that the height of a typical storage container can be 30-40cm high, the amplitude of oscillation of the grid framework structure can be quite extreme during a seismic event.

Taking the crude example of the oscillation of the grid framework structure anchored to the ground to be equivalent to the oscillation of a pendulum, then the displacement, s, of the grid framework structure from the vertical during ground movement can be given by the equation:

$$s = L \times \theta \qquad (1)$$

where L is the effective height of the grid framework structure and $\Theta$ is the angle the grid framework structure makes with the vertical. When $\Theta$ is expressed in radians, s is taken to be the amplitude of oscillation of the grid framework structure. Thus, according to equation (1), the greater the height of the grid framework structure, the greater the amplitude of oscillation of the grid framework structure during ground movement. Excessive oscillation of the grid framework structure as a result of a seismic event may result in weakening of the structural fasteners holding the grid members and/or the upright members together, and in a worst case scenario may cause the grid framework structure to collapse. Considering that people are working below the grid structure, particularly below the mezzanine level as discussed above, collapse of the grid framework structure would risk the lives of the people below the mezzanine level. In addition to areas of the grid framework structure breaking apart, oscillation of the grid framework structure would also cause the storage containers stacked between the upright members and/or the contents of the storage containers to be susceptible to being thrown about. A grid framework structure is required that would isolate areas of the grid framework structure, particularly where people are located, so as to mitigate the risk of injury to the people should the grid framework structure break apart or in a worst case scenario, collapse.

## Summary of the Invention

The present applicant has mitigated the above problem by isolating at least a portion of the grid structure by a bridging joint assembly comprising at least one mechanical fuse that is arranged to break under an applied load less than the load required to break the interconnections of the grid members in the grid structure. Preferably, the at least one mechanical fuse that is arranged to break under an applied load greater than or equal to a predetermined load so as isolate the at least portion of the grid structure from the remainder of the grid structure. The predetermined load is a load less than the load required to break the interconnections of the grid members in the grid structure. For example, the connections between the upright members and the grid members can be examples of the interconnections of the grid members in the grid structure. Having one or more of the connections of the grid members in the grid structure comprising a mechanical fuse that breaks under an applied load lower than the load to break the interconnections of the grid members in the grid structure allows select portions of the grid structure to break under an applied load. Thus, for clarification, the applied load is a load that will break the mechanical fuse but not the interconnections of the grid members in the grid structure. This is particularly advantageous where the at least portion of the grid structure is above a mezzanine level where people are working below. The isolation of the at least portion of the grid structure would help to prevent the remainder of the grid structure having a detrimental impact on the at least portion of the grid structure. In other words, isolating the at least portion of the grid structure from the remainder of the grid structure would help to prevent the bending moments generated in the remainder of the grid structure from bringing down the at least portion of the grid structure and thereby mitigate injury to people working under the at least portion of the grid structure, e.g. under the mezzanine level.

More specifically, the present invention provides a grid framework structure for supporting a load handling device operative to move one or more containers, said grid framework structure comprising:

a plurality of upright members arranged to form a plurality of vertical locations for one or more containers to be guided by the upright members in a vertical direction,

wherein the plurality of upright members are interconnected at their top ends by a plurality of grid members arranged in a grid pattern comprising a first set of grid members extending in a first direction and a second set of grid members extending in a second direction, the second set of grid members running transversely to the first set of grid members in a substantially horizontal plane to form a grid structure comprising a plurality of grid cells,

the grid structure comprising a track system positioned on the plurality of grid members, the track system comprising a plurality of tracks arranged in the grid pattern,

the grid structure comprising a first region and a second region,

wherein the grid framework structure further comprises a bridging joint assembly arranged as one or more connections between the first region of the grid structure and the second region of the grid structure, said bridging joint assembly comprising at least one mechanical fuse that is arranged to break under an applied load greater than or equal to a predetermined load, said predetermined load being lower than the load for breaking the interconnections between the plurality of upright members and the plurality of track members of the grid structure so as to allow the first region of the grid structure to separate from the second region the grid structure when the applied load exceeds the predetermined load.

The at least portion of the grid structure can represent a first region of the grid structure and the remainder of the grid structure can represent a second region of the grid structure. The first region of the grid structure can be arranged on a mezzanine level such that the grid structure extends across the mezzanine level. Optionally, the first region of the grid structure comprises one or more ports through which storage containers can be transferred out of and/or into the grid framework structure via a grid cell of the grid structure. For example, delivery ports may be arranged in the first region of the grid structure on the mezzanine level such that a robotic load handling device operative on the grid structure may travel into the first region of the grid structure from the second region and deliver storage containers to a pick station below the mezzanine level supporting the first region of the grid structure via the delivery port. The reverse is true when retrieving one or more storage containers from the pick station below the mezzanine level via a pick-up port.

Optionally, the at least one mechanical fuse comprises at least one shear pin that is configured to break when the applied load in a direction parallel to the first and/or the second direction exceeds or is equal to the predetermined load. For example, the mechanical fuse can comprise a bolt having at least one breaking zone that is configured to break under a shear load. The breaking zone could be a reduced cross-sectional area of the bolt that would break under the predetermined load. Other names for the shear pin include but are not limited to break away bolts or fuse bolts. Typically, during ground movement as a result of a seismic event, movement of the grid framework structure is along the direction along the first and/or second direction. Bending moments generated in the grid structure as a result of ground moment are transferred along the grid members which extend along the first and second directions. When the bending moments exceed or is equal to a predetermined threshold to cause the mechanical fuse to break, the first region of the grid structure becomes isolated from the second region of the grid structure. As discussed above, the wheel assembly of a robotic load handling device comprises a pair of wheels at the front and back of the vehicle body and a pair wheels at each side of the vehicle body. To enable a robotic load handling device to move on the grid structure, preferably, the bridging joint assembly is arranged as two or more connections between the first region of the grid structure and the second region of the grid structure.

Optionally, the bridging joint assembly is configured for connecting the ends of adjacent grid members in the grid structure. One example of incorporating a mechanical fuse into the bridging joint assembly when connecting the ends of adjacent grid members together is by connecting at least one bracket to the ends of the adjacent grid members by a plurality of fasteners, wherein at least one of the plurality of fasteners comprises the at least one mechanical fuse such that the bracket is arranged to separate from at least one end of the adjacent grid members when the applied load on the at least one mechanical fuse exceeds or is equal to the predetermined load. For example, the bracket could be a plate that extends across the ends of the adjacent grid members in an overlapping fashion and fastened to the ends of the adjacent grid members by the plurality of fasteners, wherein one or more of the plurality of fasteners is the mechanical fuse. When an applied load on the mechanical fuse exceeds or is equal to the predetermined load, the mechanical fuse breaks, causing the bracket to separate from at least one end of the grid member. However, there are other means to incorporate a mechanical fuse in the bridging joint assembly of the present invention. For example, instead of fabricating one or more fasteners as a mechanical fuse, at least one grid member itself can be fabricated as a mechanical fuse that extends between the ends of adjacent grid members and which is configured to break when an applied load exceeds or is equal to a predetermined load.

Whilst ground movement as a result of a seismic event will generate lateral forces to cause the grid framework structure to move, there are other forces that will cause the grid framework structure to move and without any form of relief would cause the grid structure to distort or buckle. For example, ambient temperature or temperature differences within the building or area where the grid framework structure is arranged can also bring distortion to the grid structure and ultimately to the track system as a result of thermal expansion of the grid structure and/or track system. The expansion and contraction of the tracks due to the temperature differences may result in the buckling or over tension in the tracks, potentially causing movement of any of the components of the grid structure and in a worst case scenario, causing a robotic load handling device to derail from the track system. The expansion and contraction of the grid structure and/or track system can be a regular occurrence due to fluctuations in the temperature, and some sort of relief is necessary in the grid structure to mitigate the movement of the grid structure as a result of thermal expansion of the grid members so as not to cause one or more robotic load handling devices operative on the track system to derail.

To allow movement of the grid structure as a result of thermal expansion, preferably the bridging joint assembly comprises at least one slide bearing that is arranged to cooperate with a slot in the bracket and/or the at least one end of the adjacent grid members in a junction area where the at least one bracket overlaps the at least one end of the adjacent grid member so as to enable the at least one bracket and/or the at least one end of the adjacent grid member to slide relative to each other. In comparison to movement as a result of thermal expansion, movement as a result of a seismic event can be much more extensive. The slide bearing provides relief to the grid structure to accommodate movement as a result of thermal expansion but the mechanical fuse fastening the ends of adjacent grid members together is able to break to separate the first region of the grid structure, should the movement of the grid structure be too excessive which would otherwise cause destruction of the grid framework structure.

Alternatively or in addition to a bracket connecting the ends of adjacent grid members, the bridging joint assembly can be arranged to connect at least one of the plurality of upright members to at least one of the plurality of grid members where the plurality of grid members intersect in the grid structure, i.e. at a node of the grid structure. For example, the bridging joint assembly may comprise a cap plate, said cap plate being cross shaped having four connecting portions for connecting to separate grid members in the grid structure, wherein at least one of the four connecting portions is connected to a grid member by the at least one mechanical fuse. When an applied load exceeds or is equal to a predetermined load, one of the connections at the node of the grid structure where the grid members intersect breaks as a result of the mechanical fuse causing the grid member connected to the cap plate to separate from the cap plate.

To prevent a robotic load handling device derailing through movement of the tracks as a result of thermal expansion, preferably, the bridging joint assembly further comprises a thermal expansion joint comprising a first track element and a second track element, a bridging member extending across the ends of the first and second track elements so as to provide a continuous track surface extending longitudinally in the first or second direction across the ends of the first and second track elements. The bridging member of the thermal expansion joint is arranged across the first and second track elements such that the wheels of a robotic load handling device transfers its weight from the first track element to the second track element without or experiencing minimal step in the track when passing across the thermal expansion joint. Preferably, the bridging member has a first end attached to the first track element and a second end moveable relative to the second track element.

The first and second track elements are elongate and configured to move relative to one another in a longitudinal direction in a junction area where the bridging member extends across first and second track elements.

Optionally, the second end of the bridging member is configured to be received in a correspondingly shaped recess in the second track element to provide the continuous track surface. For example, the bridging member comprises a portion of the upper profile of the track surface and the correspondingly shaped receiving recess comprises the remainder of the upper profile of the track surface such that when the second end of the bridging member is received in the correspondingly shaped receiving recess of the second track element, the upper profile of the track surface is completed so as to allow a robotic load handing device to move across the thermal expansion joint. The upper profile of the track surface can be a single track or a double track as discussed above.

Optionally, the second end of the bridging member is arranged to overlap the second track element. Optionally, the bridging member further comprises a guide member arranged to slide along a groove in the second track element such that the bridging member is constrained to move along the groove. The guide member can function as a slide bearing that is arranged to slide along a runner so as to provide a continuous track surface when the first and second track elements move relative to each other. Other means to cause the first track element to move relative to the second track element so as to provide a continuous track surface that extends from the first track element to the second track element known in the art are applicable in the present invention.

The thermal expansion joint ensures that the track surface is maintained during expansion and/or contraction of the grid members. The thermal expansion joint is also able to accommodate small distortion of the grid structure as a result of ground movement. However, when the ground movement becomes excessive in a manner characteristic of a seismic event, the mechanical fuse connecting the ends of adjacent grid members or the upright member breaks, so separating different regions of the grid structure.

As the bridging member extends across the ends of the first and second track elements, the bridging joint assembly further comprises a support arranged between the ends of the first and second track elements, said support being arranged to support the bridging member in a junction area between the ends of the first and second track elements. Without the support, there is the risk that at least a portion of the bridging member will bow under the weight of a robotic load handling device travelling across the bridging joint assembly in the junction area where the ends of the first and second track elements separate. In other words, the separation of the ends of the first and second track elements creates a gap that is bridged by the bridging member extending over the gap to provide a continuous track surface.

Preferably, at least a portion of the plurality of upright members are arranged to form a plurality of vertical storage columns for one or more storage containers to be stacked between the at least portion of the plurality of the upright members. The grid framework structure can be divided into a first region for moving the storage containers into and out of the grid framework structure, and a second region for the storage of storage containers in a plurality of vertical storage columns where one or more storage containers are stacked between and guided by the upright members. The first region of the grid framework structure predominantly comprises one or more ports through which storage containers can be transferred out of and/or into the framework structure. Preferably, the second region of the grid structure is arranged above the at least portion of the plurality of upright members forming the plurality of vertical storage columns.

Preferably, the plurality of upright members comprises a first and second set of upright members, the at least portion of the plurality of upright members defining the second set of upright members such that the first region of the grid structure is arranged above the first set of upright members. Optionally, the length of the first set of upright members is different to the second set of upright members. As the second set of upright members are arranged for storing one or more stacks of storage containers in vertical storage columns, the first set of upright members can be much shorter than the second set of upright members as they are predominantly used to guide the storage containers in and/or out of the grid framework structure.

Since the second set of upright members are arranged to form a plurality of vertical storage columns, they are much longer than the first set of upright members which are predominantly used to guide the storage container in and/or out of the grid framework structure. Thus, the vertical storage columns provided by the second set of upright members can be used to store stacks of storage containers which can be as much as 21 storage containers high. The first set of upright members are usually arranged on the mezzanine level. When fulfilling a customer order, one or more of the storage containers containing items to fulfil the customer order are removed from its vertical storage column and transported over to the first region of the grid structure by a robotic load handling device where it is lowered into a pick station below the mezzanine level via a delivery port. The same principle applies when retrieving a storage container from the pick station via a pick-up port by a load handling device operative on the first region of the grid structure, where the storage container is subsequently transported to its appropriate vertical storage column below the second region of the grid structure.

Ground movement as a result of a seismic event would inevitably cause part of the grid framework structure comprising the longer, second set of upright members to oscillate at a greater amplitude than the shorter, first set of upright members. The greater amplitude of oscillation of the longer, second set of upright members would put a strain on the grid members linking or connecting the first region of the grid structure being supported by the shorter, first set of upright members. In a worst case scenario, this strain may cause the interconnections of the grid members at the upright members to loosen and eventually fail. This strain is exacerbated by the movement of the storage containers stacked between the plurality of upright members.

To prevent the part of the grid framework structure comprising the longer, second set of upright members from putting strain on the interconnections of the grid members in the first region of the grid structure, the bridging joint assembly of the present invention configured for connecting the first region of the grid structure to the second region of the grid structure comprises at least one mechanical fuse that is arranged to break under an applied load greater than or equal to the predetermined load. The predetermined load is set to be lower than the load for breaking the interconnections between the plurality of upright members and the plurality of grid members of the grid structure, so as to allow the first region of the grid structure to separate from the second region the grid structure when the applied load exceeds or equal to the predetermined load.

Optionally, the plurality of grid members comprises a plurality of a first type of grid members arranged in the grid pattern to define the first region of the grid structure and a plurality of second type of grid members arranged in the grid pattern to define the second region of the grid structure, the plurality of the first type of grid members being different to the plurality of the second type of grid members. To strengthen part of the grid framework structure used for the storage of storage containers, each grid member of the plurality of the second type grid members has a flexural strength greater than each grid member of the plurality of the first type of grid members. This is because during a seismic event, the bending moments as a result of the oscillation of the upright members are largely transferred at the interconnections where the plurality of grid members intersect. To resist the bending moments at the intersections of the grid members, the grid members are constructed with a larger cross-sectional wall thickness than traditional grid members. Traditional grid members are normally constructed from relatively thin metallic strips comprising back-to-back C sections that are bolted together. However, such grid members are not able to withstand excessive ground movement as a result of a Type D seismic event where bending moments of the grid member may ultimately cause the fasteners interconnecting the grid members to the top ends of the upright member to loosen and break apart. To mitigate this effect, the grid members are constructed to resist excessive bending moments. For example, the grid structure of a seismic grid framework structure may comprise tubular beams. In contrast to back-to-back C sections which are bolted together, tubular beams offer improved rigidity and strength. The tubular cross-sectional profile of the grid members offer resistance to bending moments in multiple directions. Instead of one or more bolts being used to interconnect the grid members where they cross at the top ends of the upright members, the tubular beams are welded together at the joints where the grid members cross at the intersections to from a rigid joint with little or no play. Welding at the joints offers superior rigidity in comparison to bolts, which are more susceptible to loosening. The second region of the grid structure can optionally form part of a seismic grid framework structure.

Due to the differences in height between the upright members supporting the first region of the grid structure extending over the mezzanine level and the upright members supporting the second region of the grid structure, the bending moments of the grid members in the first region would be much smaller than in the second region of the grid structure. As a result, the grid members of the first region of the grid structure can optionally be constructed from weaker grid members, e.g. back-to-back C sections, to keep costs down, as the grid members of the first region would not experience the same bending moments as the grid members of the second region of the grid structure during a seismic event. Typically, the mezzanine level supporting the first region of the grid structure is constructed from structurally rigid upright support posts that extend up from the ground so as to ensure that the grid members extending over the mezzanine level are at the same level as the second region of the grid structure extending over the vertical storage columns. The height of the upright support posts defines the height of the mezzanine level which in turn defines the level of the grid structure supported by the mezzanine level and ensures that the grid structure lies in a substantially horizontal plane. Generally, the upright support posts are I beams that would resist bending moments in comparison to the upright members forming the vertical storage columns. Due to the rigidity of the upright supporting posts, smaller bending moments are experienced by the grid members - hence, the advantage of constructing the first region of the grid structure from weaker grid members than the second region of the grid structure. Despite the grid members of the second region of the grid structure being able to able to resist bending moments as a result of lateral forces from a seismic event, when connected to the first region of the grid structure, lateral forces from the second region of the grid structure are transferred to the grid members of the first region of the grid structure. This may have the undesired effect of weakening the fasteners interconnecting the grid members to the tops of the upright members in the first region of the grid structure. The bridging joint assembly comprising the at least one mechanical fuse would help to mitigate the tearing down of the grid members in the first region of the grid structure by the lateral forces experienced by the second region of the grid structure. Once the lateral forces exceed or is equal to the predetermined load, the mechanical fuse would shear, separating the first region of the grid structure from the second region of the grid structure, and thereby ensuring that the grid members in the first region remain intact. However, the present invention is not limited to the grid members forming the first region of the grid structure being different to the grid members forming the second region of the grid structure, and the same type of grid members can extend throughout the entire grid structure.

The present invention provides a storage and retrieval system comprising:

    i) a grid framework structure as defined in any of the claims 1 to 13;

    ii) a plurality of stacks of containers arranged in storage columns located below the grid, wherein each storage column is located vertically below a grid cell;

    iii) a plurality of load handling devices for lifting and moving containers stacked in the stacks, the plurality of load handling devices being remotely operated to move laterally on the grid above the storage columns to access the containers through the grid cells, each of said plurality load handling devices comprises:

        a) a wheel assembly for guiding the load handling device on the grid;

        b) a container-receiving space located above the grid; and

        c) a lifting device arranged to lift a single container from a stack into the container-receiving space.

Further features of the present invention will be apparent from the detailed description.

## Detailed Description

## Grid Framework Structure

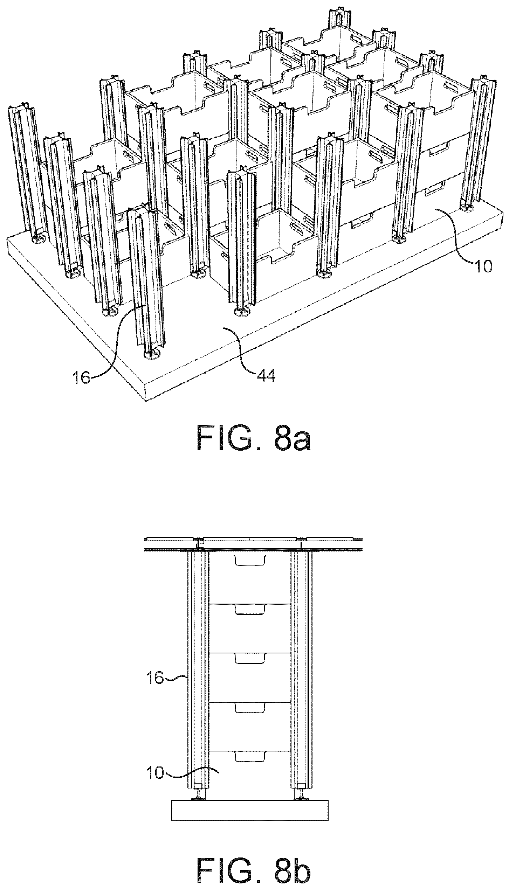

It is against the known features of the storage system such as the grid framework structure and the load handling device described above with reference to Figures 1 to 5, that the present invention has been devised. Figure 6 shows a top view of a section or a portion of a traditional grid structure 50 comprising four adjoined grid cells 42 and Figure 7 shows a perspective side view of a single grid cell 42 supported by four vertical uprights 16 to form a single vertical storage column 44 for the storage of one or more containers 10 in a stack. Figure 8(a and b) shows a perspective view of the upright members being arranged to form vertical storage columns 44 for containers 10 to be stored within the vertical storage columns 44. Figure 8b shows a representation of the vertical stack up of the containers 10 between the upright columns 16.

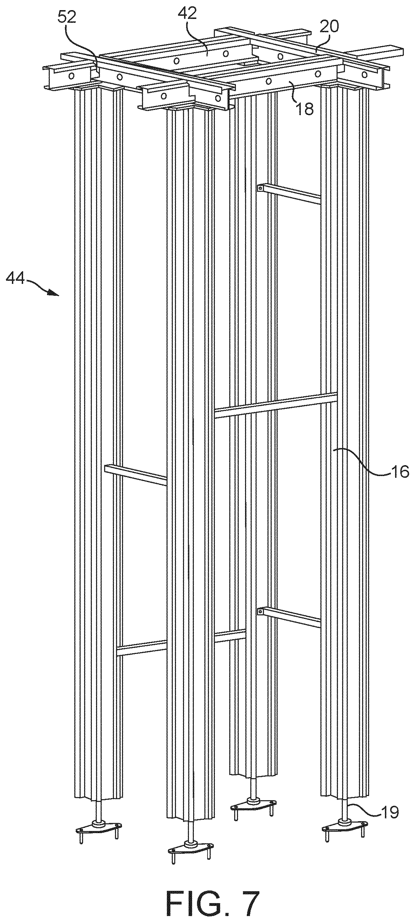

Each of the vertical uprights members 16 is generally tubular. In transverse cross-section in the horizontal plane of the storage column 44 shown in Figure 2, each of the vertical uprights 16 comprises a hollow centre section 46 (typically a box section) with one or more guides 48 mounted to or formed at the corners of the hollow centre section 46 that extend along the longitudinal length of the vertical upright 16 for guiding the movement of the containers along the vertical storage column 44. The one or more guides 48 comprise two perpendicular container guiding plates. The two perpendicular container guiding plates are arranged to accommodate a corner of a container or a corner of a stack of containers. In other words, each of the corners of the hollow centre section 46 defines two sides of a substantially triangular area which may accommodate a corner of a container or storage bin. The corners are evenly arranged around the hollow centre section 46, such that multiple vertical uprights 16 may provide multiple adjacent storage columns, wherein each vertical upright 16 may be common or shared for up to four separate storage columns. Also shown in Figure 7 is that each of the vertical uprights 16 are mounted on an adjustable grid levelling mechanism 19 at the foot of the vertical uprights comprising a base and a threaded shaft that can be extended or retracted to compensate for an uneven floor.

The transverse cross-section in the horizontal plane of the storage column 44 in Figure 2 shows that an individual storage column 44 is made up of four vertical uprights 16 arranged at the corners of the container or storage bin 10. A storage column 44 corresponds to a single grid cell. The cross section of the vertical upright 16 is constant over the whole length of the vertical upright. The periphery of a container or storage bin in the horizontal plane in Figure 2 shows the container or storage bin having four corners and the arrangement of four vertical uprights 16 at the corners of the containers or storage bins within the vertical storage column 44. A corner section of each of the four vertical uprights, one from each of the four vertical uprights, ensures that a container or storage bin stored in the storage column 44 is guided into a correct position relative to any container or storage bin stored within the storage column and the stacks of containers or storage bins in the surrounding storage columns. A robotic load handling device operative (not shown) on the grid structure 50 is able to lift a container or storage bin as it is guided along the vertical upright members 16 through a grid cell 42. Thus, the vertical upright members 16 have a dual purpose: (a) to structurally support the grid structure 50, and (b) to guide the containers or storage bins 10 in the correct position through a respective grid cell 42.

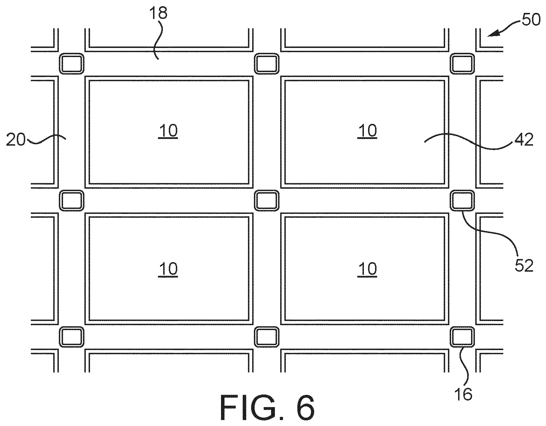

A top plan view of a section of the grid structure 50, shown in Figure 6, shows a series of horizontal intersecting beams or grid members 18, 20 arranged to form a plurality of rectangular frames constituting grid cells 42, more specifically a first a set of grid members 18 extend in a first direction X and a second set of grid members 20 extend in a second direction Y, the second set of grid members 20 running transversely to the first set of grid members 18 in a substantially horizontal plane, i.e. the grid structure is represented by Cartesian coordinates in the X and Y direction. The term "vertical upright(s)", "upright member(s)" and "upright column(s)" are used interchangeably in the description to mean the same thing or feature. For the purpose of explanation of the present invention, the point or junction where the grid members intersect or cross shown by the squares in Figure 6 can be defined as nodes or intersections 52. It is clearly apparent from the layout of at least a portion or section of a known grid structure 50 constituting four adjoining grid cells 42 shown in Figure 6, each intersection or node 52 of the grid structure 50 is supported by a vertical upright 16, i.e. they both coincide. From the section or at least a portion of the grid structure 50 shown in Figure 6, the four adjoining grid cells are supported by nine vertical uprights 16, i.e. three sets of vertical uprights 16 supporting the grid structure in three rows, where each row comprises three nodes 52.

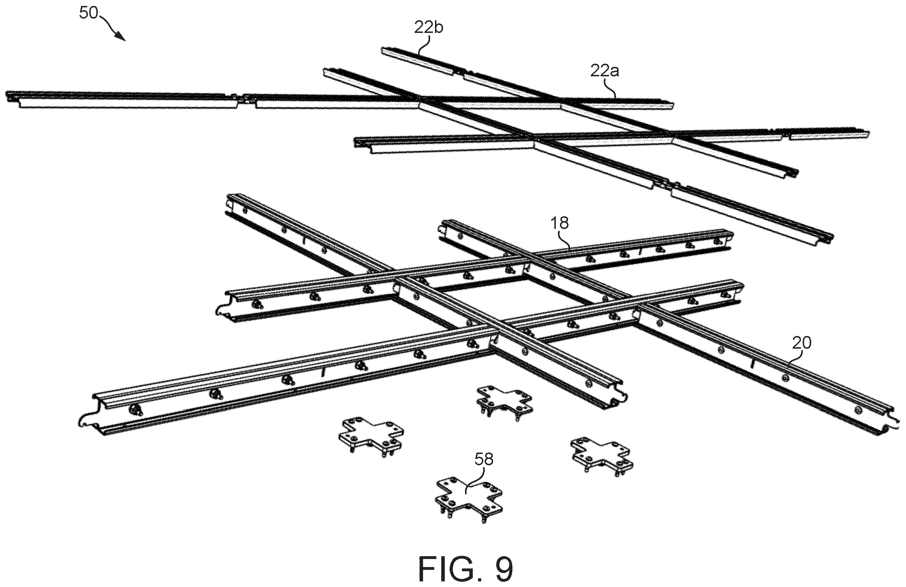

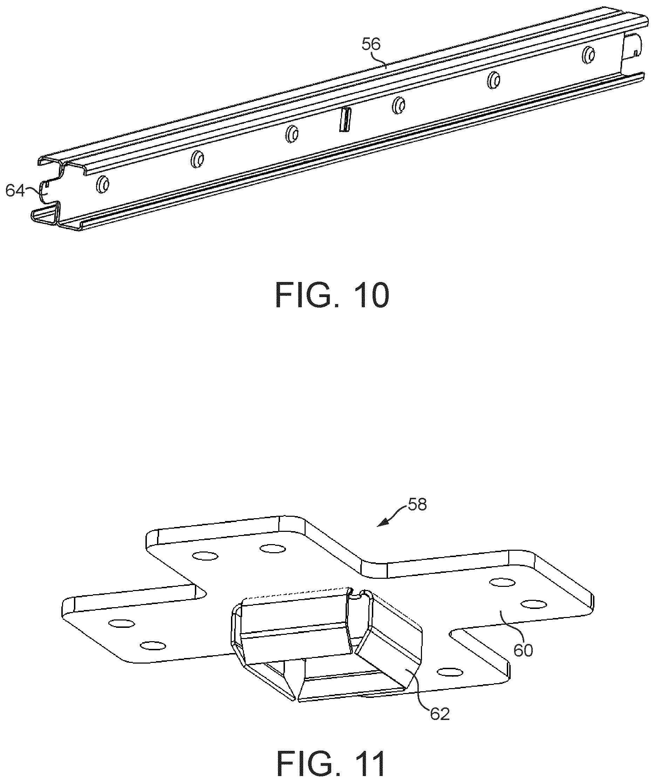

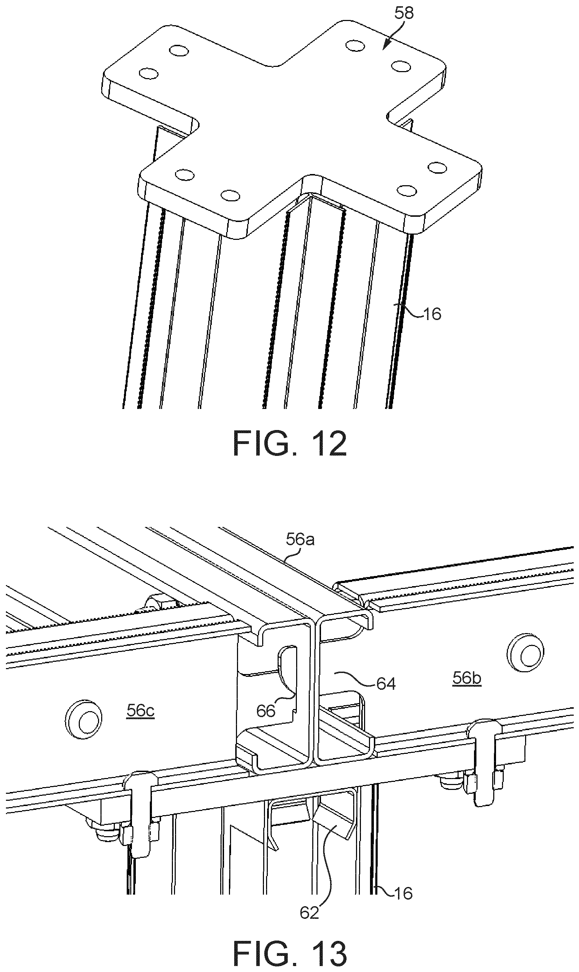

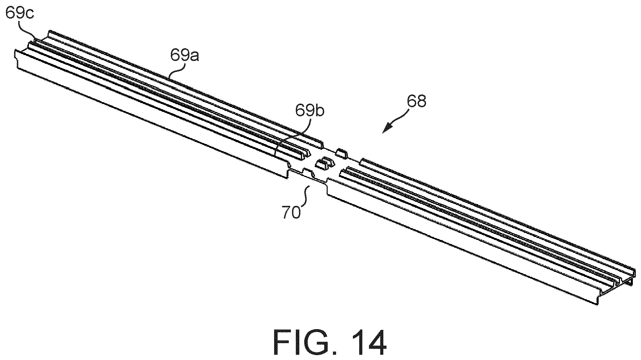

Each of the grid members of the present invention can comprise a track support 18, 20 and/or a track or rail 22a, 22b (see Figure 9) whereby the track or rail 22a, 22b is mounted to the track support 18, 20. A load handling device is operative to move along the track or rail 22a, 22b of the present invention. Alternatively, the track 22a, 22b can be integrated into the track support 18, 20 as a single body, e.g. by extrusion. In the particular embodiment of the present invention, the grid member comprises a track support 18, 20 and the track or rail 22a, 22b is mounted to the track support 18, 20. At least one grid member in a set, e.g. a single grid member, can be sub-divided or sectioned into discrete grid elements that can be joined or linked together to form a grid member 18, 20 extending in the first direction or in the second direction (see Figures 9 and 14). Where the grid members comprise a track support, the track support can also be sub-divided into discrete track support elements that are linked together to form the track support (see Figure 10 and 13). The discrete track support elements making up a track support extending in the first axial direction and in the second axial direction is shown in Figure 9. An individual track support element 56 used to make up a track support 18, 20 is shown in Figure 10. The track support 18, 20 in transverse cross section can be a solid support of C-shaped or U-shaped or I-shaped cross section or even double-C or double-U shaped support. In the particular embodiment of the present invention, the track support element 56 comprises double back-to-back C sections bolted together.

A connection plate or cap plate 58 as shown in Figures 9 and 11 can be used to link or join the individual track support elements 56 together in both the first and the second direction at the junction where multiple track support elements cross at the nodes 52 in the grid structure 50, i.e. the cap plate 58 is used to connect the track support elements 56 together to the vertical uprights 16. As a result, the vertical uprights 16 are interconnected at their upper ends at the junction where the multiple track support elements cross in the grid structure 50 by the cap plate 58, i.e. the cap plate is located at the node 52 of the grid structure 50. As shown in Figure 11, the cap plate 58 is cross shaped having four connecting portions 60 for connecting to the ends or anywhere along the length of the track support elements 56 at their intersections 52. The interconnection of the track support elements to the vertical uprights at the nodes by the cap plate 58 is demonstrated in the cross-sectional profile of the node 52 shown in Figure 13. The cap plate 58 comprises a spigot or protrusion 62 that is sized to sit in the hollow central section 46 of the vertical upright 16 in a tight fit for interconnecting the plurality of vertical uprights 16 to the track support elements as shown in Figure 11 and 12. The spigot 62 is received in a correspondingly shaped opening in the vertical upright or upright member 16 in a snap fitting arrangement so as to prevent rotation of the cap plate relative to the vertical upright 16 about a vertical axis along the longitudinal axis of the vertical upright. The spigot 62 comprises downwardly extending resilient members that cooperate to snap fit in to the opening defined by the hollow central opening section 46 of the vertical upright. Also shown in Figure 13 are the track support elements 56a, 56b extending in both perpendicular directions corresponding to the first direction (x-direction) and the second direction (y-direction). The connecting portions 60 are perpendicular to each other to connect to the track support elements 56a, 56b extending in the first direction and in the second direction. The cap plate 58 is configured to be bolted to the ends of the track support elements 56a, 56b or along the length of the track support elements. Each of the track support elements 56a, 56b is arranged to interlock with one another at the nodes to form the grid structure 50 according to the present invention. To achieve this, distal or opposing ends of each of the track support elements 56a, 56b comprise locking features 64 for interconnecting to corresponding locking features 64 of adjacent track support elements. In the particular embodiment of the present invention, opposing or distal ends of one or more track support elements comprise at least one hook or tongue 64 that is receivable in openings or slot 66 midway of an adjacent track support element 56 at the junction where the track support elements cross in the grid structure 50. Referring back to Figure 10 in combination with Figure 13, the hooks 64 at the end of a track support element 56 are shown received in an opening 66 of an adjacent track support element extending across a vertical upright 16 at the junction where the track support elements 56 cross. Here, the hooks 64 are offered up to an opening 66 either side of a track support element 56b. In the particular embodiment of the present invention, the opening 66 is halfway along the length of the track support element 56 so that when assembled together, adjacent parallel track support elements 56 in the first direction and in the second direction are offset by at least one grid cell. This is demonstrated in Figure 9.

To complete the grid structure 50 once the track support elements 56 are interlocked together to form a grid pattern comprising track supports 18 extending in the first direction and track supports 20 extending in the second direction, a track 22a, 22b is mounted to the track support elements 56. The track 22a, 22b is either snap-fitted and/or fitted over the track support 18, 20 in a slide fit arrangement (see Figure 9). Like the track support of the present invention, the track comprises a first set of tracks 22a extending in the first direction and a second set of tracks 22b extending in the second direction, the first direction being perpendicular to the second direction. A first set of tracks 22a is sub-divided into multiple track elements or elongated track elements 68 in the first direction such that when assembled together adjacent parallel track elements in the first direction are offset by at least once grid cell. Similarly, a second set of tracks 22b is sub-divided into multiple track elements 68 in the second direction such that when assembled adjacent track elements in the second direction are offset by at least one grid cell. This is demonstrated in Figure 9. An example of a single track element or elongated track element 68 is shown in Figure 14 comprising an elongated element which is profiled to guide a load handling device on the grid structure and typically profiled to provide either a single track surface so as to allow a single load handling device to travel on the track or a double track so as to allow two load handling devices to pass each other on the same track. The track surface being defined as a surface on which the wheels of the load handling device roll. In the case where the elongated element is profiled to provide a single track, the track comprise opposing lips or ridges (one lip on one side of the track and another lip at the other lip at the other side of the track) running along each longitudinal edge of the track to guide or constrain each wheel from lateral movement on the track. For the purpose of the present invention, the lips or ridges running along each longitudinal edge of the track is defined as a guide surface for constraining the wheels of the load handling device on the track. In the case where the profile of the elongated element is a double track as shown in the track element shown in Figure 14, the track comprise two lips 69a, 69b running along the longitudinal edge of the track and a central lip or ridge 69c running parallel with the lips along the edge of the track, i.e. the track comprises three parallel ridges. As the two lips or ridges 69a, 69b extend longitudinally along the edge of the track element, the two lips 69a, 69b at the edge of the track element are respectively defined as a first edge guide surface and a second edge guide surface. The central lip or ridge 69c is at the same distance from each of the lips or ridges at the edge of the track so that the area between the central lip and the lips at the edges of the track provides two track surfaces to allow the wheels of adjacent load handling devices to pass each other in both directions on the same track. In the particular embodiment shown in Figure 14, two lips or ridges 69c are shown extending longitudinally along the central portion of the track that cooperate with the lips 69a, 69b at the edge of the track to provide track surfaces either side of the central ridges 69c. In all cases, when traversing on the grid structure, the wheels of the load handling device are constrained on both sides or faces of the wheels of the load handling device. As with the track support elements, multiple elongate track elements in the first direction and the second direction are laid together to form a track in both directions. The fitting of the track element 68 to the track support 18, 20 comprises an inverted U-shaped cross-sectional profile that is shaped to cradle or overlap the top of the track support 18, 20. One or more lugs extending from each branch of the U shape profile engage with the ends of the track support 18, 20 in a snap fit arrangement. The track elements 68 comprise a cut out or recess 70 to accommodate the track support elements 56 at an upright column discussed above. Since the track elements 68 are sized to extend or span across a single upright in the grid structure, the cut out 70 is at the centre or formed midway of each of the track elements 68. Equally plausible in the present invention is that the track 22a, 22b can be integrated into the track supports 18, 20 rather than being separate components.

The grid framework structure 14 can be considered as a rectilinear assemblage of upright columns 16 supporting the grid structure 50 formed from intersecting horizontal grid members 18, 20, i.e. a four wall shaped framework. Upon receipt of a customer order, a load handling device operative to move on the tracks is instructed to pick up a storage bin containing the item of the order from a stack in the grid framework structure and transport the storage bin to a pick station whereupon the item can be retrieved from the storage bin and transferred to one or more delivery containers. Typically, the pick station comprises a container transport assembly to transport one or more containers to an access station where the contents of the containers can be accessed. The container transport assembly is typically a conveyor system comprising multiple adjacent conveyor units.

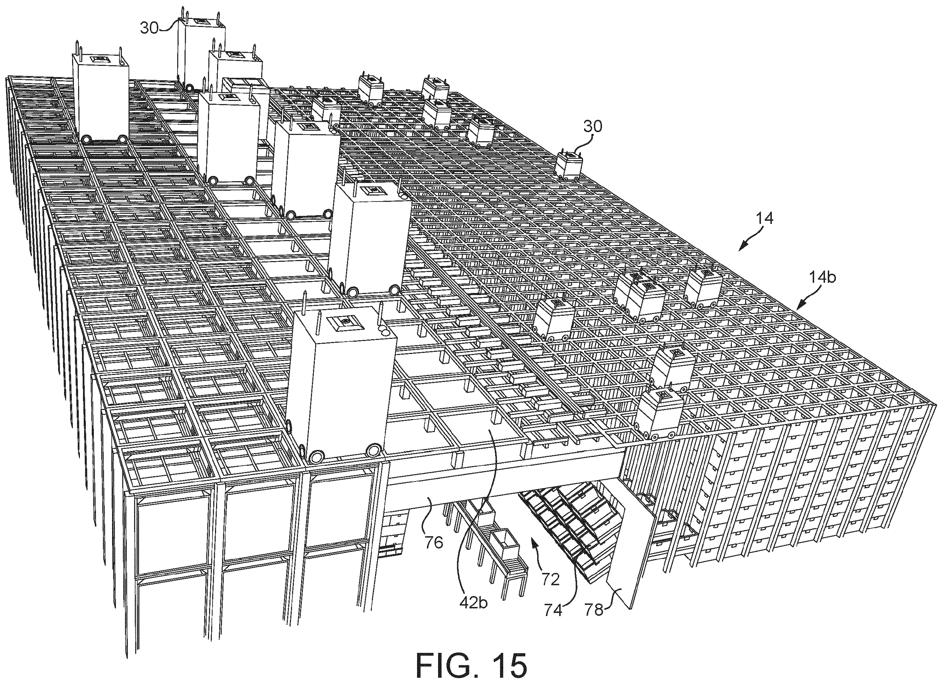

In a known fulfilment centre as shown in Figure 15, items and stock required to fulfil customer orders are located in containers or storage bins 10, and the containers or storage bins can be arranged along aisles. On the opposite side of the aisle from the containers or storage bins, a conveyor system is located, the conveyor system carrying customer delivery bins or containers. The conveyor system is arranged so as to pass a proportion of the delivery bins or containers moving on a backline conveyor through pick stations, via station containers, where items ordered by a customer are transferred by an operative from a storage bin or container to a customer delivery bin or container. When a customer delivery container is located at a picking station 74 on the conveyor system, the customer delivery container is paused and an operator selects a required item from a storage bin or container and places it in the customer delivery bin or container. In a known robotic picking station, the storage bin or container is lifted from a stack containing inventory items needed to fulfil a customer order by a load handling device 30. Once lifted by the load handling device 30, the storage bin or container is delivered by the load handling to an output port 42b above or adjacent a pick station 74. At the pick station 74, the required inventory item or items may be manually or robotically removed from the storage bin or container and placed in a delivery container, the delivery container forming part of the customer order, and being filled for dispatch at the appropriate time.

A known fulfilment centre also include various other stations including but not limited to a charge station for charging the rechargeable power source powering the load handling devices on the grid, and a service station to carry out routine maintenance of the load handling device.

To accommodate any one of the stations or a combination thereof, a separate area 72 is provided adjacent the grid framework structure 14. Typically, the separate area 72 is provided by incorporating a mezzanine 76 supported by vertical beams 78 amongst adjacent grid framework structures 14 and is generally a standalone structure. The mezzanine 76 provides a tunnel to accommodate, for example, one or more pick stations and/or any one of the above described stations. The area below the mezzanine level is generally serviced by people working at the one or more service stations. The grid structure from adjacent grid framework structures 14 extend across the top of the mezzanine 76 to connect to a grid either side of the mezzanine level 76.

To deliver and/or pick up storage containers to and from one or more pick stations below the mezzanine level, the grid structure that extends across the mezzanine level comprises one or more ports 42b. As taught in the introductory part of the patent specification, a port represents a location or grid cell where the load handling devices can drop off and/or pick up storage containers from a pick station below the mezzanine level so that the storage containers can be accessed from outside of the grid or transferred out of or into the grid framework structure. The grid column in which the port is located may be referred to as a "delivery column". The storage grids comprise two delivery columns. The first delivery column may for example comprise a dedicated drop-off port where the container handling vehicles can drop off storage containers to be transported through the delivery column and further to an access station or a transfer station, and the second delivery column may comprise a dedicated pick-up port where the container handling vehicles can pick up storage containers that have been transported through the delivery column from an access or a transfer station. Storage containers are fed into the access station and exit the pick station via first delivery column and the second delivery column respectively.

As is apparent from Figure 15, the portion of the grid framework structure 14 at the top of the mezzanine 76 is shallower than the grid framework structure either side of the mezzanine 76, i.e. can only accommodate one or two layers of containers in a stack. The grid structure 14b that extends across the mezzanine is supported by vertical upright members 16 mounted to the mezzanine and are shorter in length than the vertical columns either side of the mezzanine. The shorter vertical upright members 16 are sized to accommodate only small number of containers in a stack, e.g. one or more containers deep, so as to ensure that the grid structure lies in a substantially horizontal plane when extending across the mezzanine, i.e. the grid level is maintained across the mezzanine level. The mezzanine level 76 is supported by separate vertical beams 78. The vertical beams 78 supporting the mezzanine 76 butt up against the grid framework structure 14 either side of the mezzanine 76. Multiple stacks of storage containers are stored in vertical storage columns either side of the mezzanine. A robotic load handling device operative on the grid structure is able to retrieve storage containers from one or more of the vertical storage columns and transport the storage container to above the mezzanine level where the load handling device can deliver the storage container to a pick station below the mezzanine level. As a result, the grid structure can be divided into different regions. To differentiate between the grid structure that extends over the mezzanine level and the grid structure that extends over the multiple storage columns, the grid structure that extends over the mezzanine level can be referenced a first region of the grid structure and the grid structure that extends over the multiple vertical storage columns either side of the mezzanine level can be referenced a second region of the grid structure. Similarly, to differentiate between the plurality of upright members supporting the first region of the grid structure above the mezzanine level and the plurality of upright members supporting the second region of the grid structure, the plurality of upright members supporting the first region of the grid structure is referenced a first set of upright members and the plurality of upright members supporting the second region of the grid structure is reference a second set of upright members. Since the storage containers are stored in multiple stacks below the grid structure in the second region, the second set of upright members making up the vertical storage columns are longer than the first set of upright members supporting the first region of the grid structure over the mezzanine level.

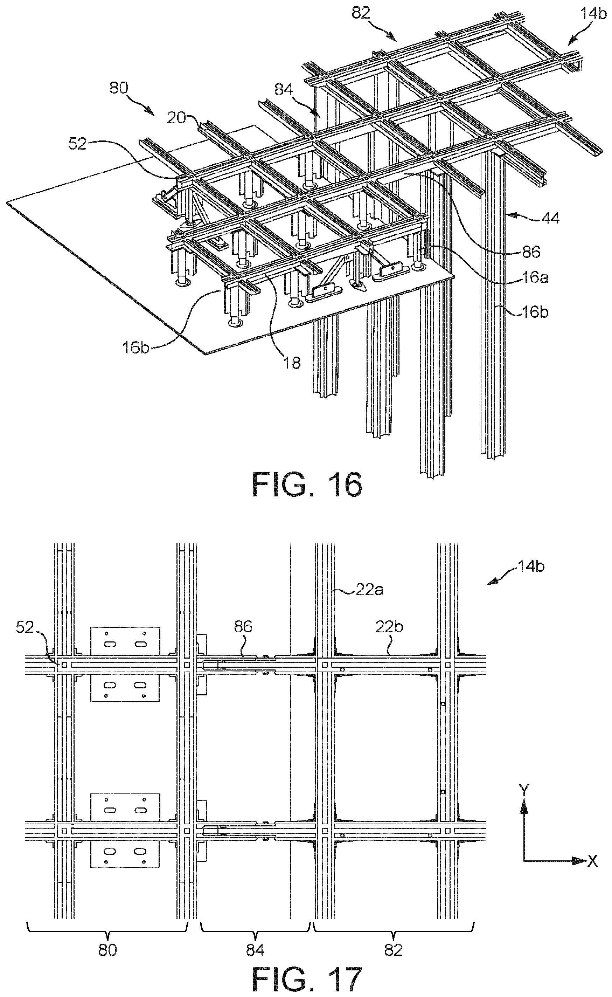

An exploded view of a section of the grid framework structure in the junction area 84 between the mezzanine level and the vertical storage columns is shown in Figure 16 and a top plan view of the grid structure highlighting the first and the second region of the grid structure is shown in Figure 17. The junction area 84 shows the differences in the length of the upright members 16, 16b supporting the first 80 and second 82 regions of the grid structure 14. The shorter of the upright members 16b termed the first set of upright members are arranged to extend over a mezzanine level (not shown) and the second set of upright members are arranged to form multiple vertical storage columns 44 for the storage of storage containers in stacks. Due to the length of the upright members 16 making up the vertical storage columns 44 in comparison to the length of the upright members 16b extending over the mezzanine level, the longer, second set of upright members 16 are more susceptible to movement than the shorter, first set of upright members. During ground movement, in particular during a seismic event, the longer, second set of upright members 16b would oscillate at a greater amplitude than the short, first set of upright members 16a. The oscillation of the grid framework structure comprising the vertical storage columns 44 is exacerbated by the stacks of storage containers stored in the vertical storage columns. The bending moments generated in the second region 82 of the grid structure as a result of the oscillation of the longer, second set of upright members 16b are transferred to the first region 80 of the grid structure extending over the mezzanine area. The greater the amplitude of oscillation of the second set of upright members, the greater the risk that the interconnections of the grid members where the grid members cross at the nodes in the first region 80 of the grid structure 14b would be compromised. Since the upright members are interconnected to the grid members by a connection plate or cap plate at the nodes of the grid structure by one or more fasteners as discussed above, there is a risk that the connection between the grid members at the nodes would loosen and in a worst case scenario fail, resulting in components of the grid structure, particularly in the first region 80 above the mezzanine area, to break away and fall into the service area. Since people work in the service area, failure of the connections interconnecting the grid members to the upright members in the first region (first set of upright members), would run the risk of injury to people working in the service area below.

## Mechanical Fuse

The present invention has mitigated the above problem by creating a weak point in the grid structure that preferentially breaks so as to separate different regions of the grid structure, thereby preventing the bending moments from one region of the grid structure from being transferred to the another region of the grid structure. In the particular embodiment shown in Figure 16 and top plan view in Figure 17, a weak point 86 is preferentially located in the grid structure in the junction area 84 where the different regions of the grid structure meet, i.e. between the first 80 and second 82 regions. The weak point 86 is configured to preferentially break when a pulling force acting on the weak point in a predetermined direction exceeds or is equal to a predetermined load but not necessary break the other connections of the grid members in the grid structure, namely the interconnections 52 of the uprights members with the grid members, e.g. via a cap plate 58. In other words, the weak point is configured to break under an applied load but not necessarily break the interconnections of the uprights members with the grid members. The predetermined direction is parallel to the longitudinal direction of the grid member 18, 20 in the junction area 84 between the first 80 and second 82 regions of the grid structure 14b shown by the arrows in Figure 17. This could be along the X direction or the Y direction depending on the orientation of the grid member in the grid structure. To preferentially create a weak point in the grid structure, it is necessary that the predetermined load for breaking the weak point is less than the other connections of the grid members in the grid structure. The other connections are namely at the interconnections 52 of the upright members with the grid members as discussed above, i.e. via a cap plate 158.

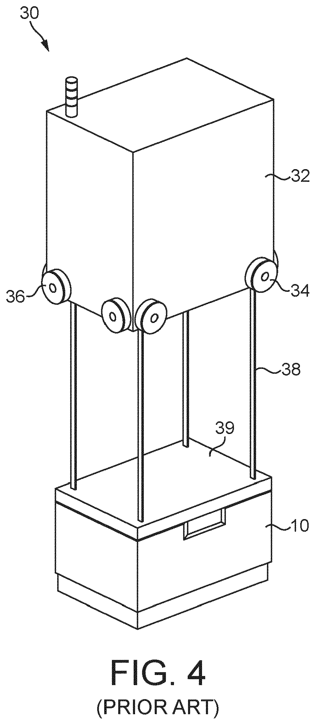

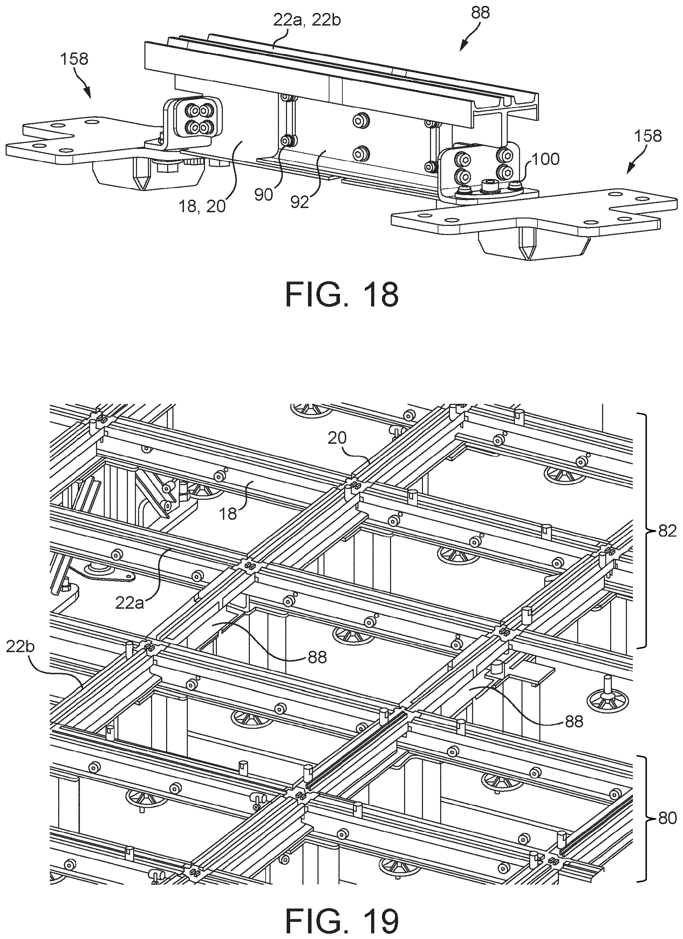

In the particular embodiment of the present invention shown in Figure 18, the weak point in the grid structure is provided by a bridging joint assembly 88 comprising a mechanical fuse 90 that is configured to break when an applied load exceeds or is equal to a predetermined load. The bridging joint assembly 88 is arranged as one or more connections between the first region of the grid structure and the second region of the grid structure (see Figure 19). Since the wheel assembly of the robotic load handling device comprises a pair of wheels at the front and back of the vehicle body and a pair of wheels either side of the vehicle body (see Figure 4), the bridging joint assembly 88 is arranged as one or more pairs of connections between the first and second region of the grid structure, i.e. between a first set of grid members and a second set of grid members. An example of the bridging joint assembly 88 according to the present invention is shown in Figure 18. The bridging joint assembly 88 in the example shown in Figures 18 comprises a bracket 92 that is configured to connect the free ends of adjacent grid members 18, 20. The other end of each of the adjacent grid members is connected to a respective cap plate 158 by one or more bolts as shown in Figure 18 for interconnecting to neighbouring upright members in the grid structure. The adjacent grid members connected together by the bridging joint assembly 88 function as a single elongated grid element that extends between the neighbouring upright members in the grid structure.

A track 22a, 22b is positioned on each of the adjacent grid members such that when the ends of the adjacent grid members are connected together by the bridging joint assembly of the present invention, a continuous track surface extends across the ends of the adjacent grid members (see Figure 19). This is to enable the wheel assembly of the robotic load handling device to travel across the bridging joint assembly of the present invention. In the particular embodiment of the present invention shown in Figure 18, the grid member functions as a track support and a separate track element is mounted to the track support, e.g. in a snap fitting arrangement.

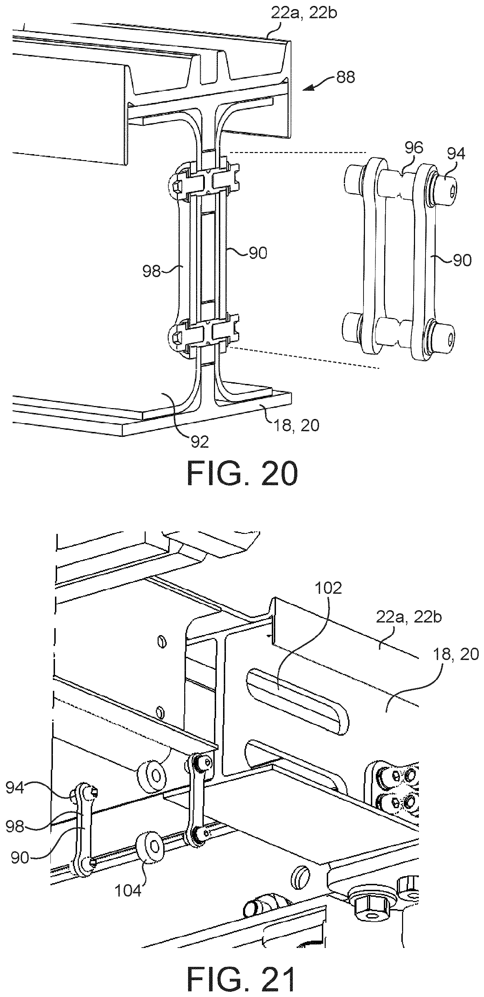

The bracket 92 that joins the ends of adjacent grid members is in the form of a plate that overlaps the ends of the adjacent grid members. In the particular example shown in the cross section of the bridging joint assembly shown in Figure 20, two brackets are shown either side of the ends of the grid member so as to clamp the ends of the adjacent grid members together. The opposing or free ends of the bracket are connected to the ends of the adjacent grid members in the junction area, where they overlap the ends of the adjacent grid members, by one or more fasteners, e.g. bolts or screws or pin, received in openings in the ends of the grid members. The one or more fasteners are arranged to break when an applied load exceeds or is equal to a predetermined load causing the ends of the adjacent grid members to separate, and thereby preferentially separate the different regions of the grid structure (see Figure 21). In the particular example shown in Figure 20, the mechanical fuse 90 comprises a shear pin 94 having a breaking zone 96 comprising a reduced cross-sectional area or neck portion of the pin that is arranged to shear when the applied load on the breaking zone exceeds or is equal to the predetermined load. In the particular example shown in Figure 20, the mechanical fuse comprises two shear pins 94 linked together by a linkage 98 so that when the pins break, the linkage keeps the shear pins together.

To prevent the other connections of the grid structure such as the interconnections between the upright members and the grid members from breaking loose under the predetermined load, the predetermined load to break the mechanical fuse is set to be less than the load of the interconnections between the plurality of upright members and grid members in the grid framework structure. Oscillation of the grid framework structure as a result of ground movement would generate a pulling force on the bridging joint assembly linking the different regions of the grid structure together. When the pulling force exerts a load on the bridging joint assembly exceeding the or is equal to the predetermined load causing the shear pin to break, at least one end of the bracket 92 separates from its connecting end of the grid member, i.e. the pulling force is less than the load holding the grid members together in the grid structure at the interconnections with the upright members. This is demonstrated in the schematic drawing shown in Figure 21 showing the separation of the ends of the grid members 18, 20. The mechanical fuse 90 can comprise one or more shear pins for connecting the bracket 92 to the ends of the grid members. In the particular embodiment shown in Figure 18, at least two fasteners at each end of the bracket are used to connect the bracket to the ends of the grid members. Thus, in order to separate the ends of the grid members, at least two of the fasteners shear under the predetermined load to separate the bracket from at least one end of the grid member.

Whilst the mechanical fuse 90 comprising one or more shear pins is arranged to connect a bracket to the ends of adjacent grid members, other means to provide a preferential weak point comprising a mechanical fuse in the grid structure are equally applicable in the present invention. For example, one or more fasteners used to interconnect the upright member to the grid member via a connection plate or cap plate can function as a mechanical fuse. For example, the one or more bolts connecting the grid member to a connecting portion 60 of the cap plate 158 can be fabricated with a break zone which is arranged to shear under an applied load exceeding or is equal to the predetermined load to cause the grid member to break away from the connecting portion and thus, the cap plate (see Figure 9). In the particular example of the present invention shown in Figure 18, at least two fasteners 100 are used to connect the end of the grid member to the cap plate. Such two fasteners can be fabricated as the mechanical fuse that is arranged to shear when the load exceeds or is equal to a predetermined load. Other means of incorporating a weak point in the grid structure comprising a mechanical fuse can include fabricating a grid member with a break zone, e.g. a reduced cross sectional area, such that when the pulling force exceeds or is equal to a predetermined load, a portion of the grid member will break. Equally, the bracket itself connecting the ends of adjacent grid members can itself comprise a break zone that is configured to break under an applied load exceeding or is equal to the predetermined load. In all of the different examples, the weak point comprising the mechanical fuse is configured to preferentially separate different regions of the grid structure during ground movement, e.g. during a seismic event.

Whilst the mechanical fuse is configured to preferentially separate different regions of the grid structure, movement of the grid structure is inevitable during the course of the operation of the grid framework structure in the fulfilment centre. For example, temperature changes in the environment where the grid framework structure is located may cause different parts of the grid framework structure to expand and contract as a result of thermal expansion. Without the provision to take account of thermal expansion, there is the risk that regions of the grid structure may distort or buckle as the length of one or more grid members expands or contracts, increasing the likelihood of one or more robotic load handling devices operative on the grid structure derailing.

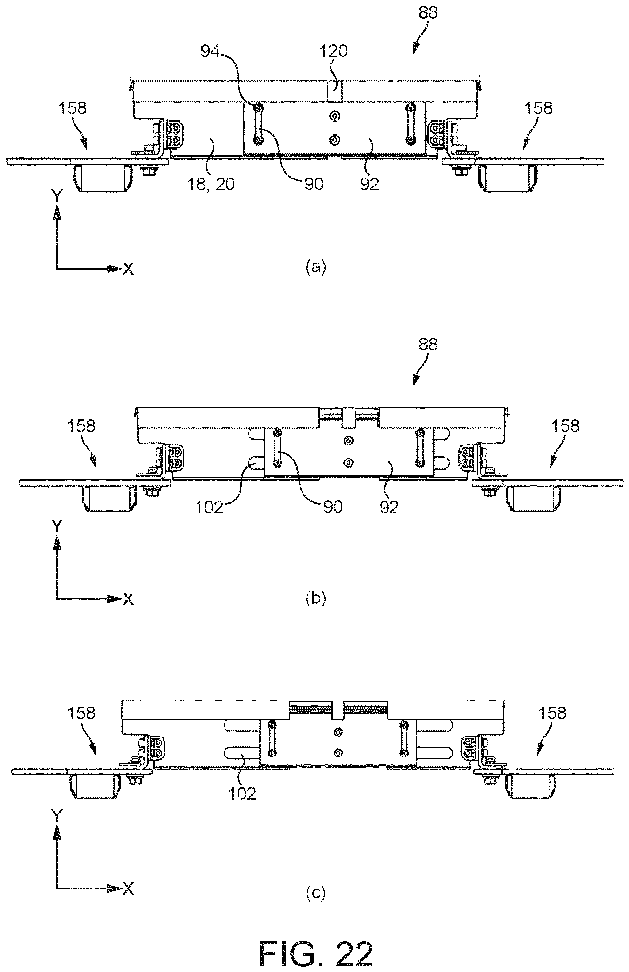

In the particular example shown in Figure 22(a to c), the opposing ends of the bracket 92 of the bridging joint assembly 88 are connected to the ends of the adjacent grid members 18, 20 in a sliding connection. The sliding connection between the bracket 92 and the ends of the grid members comprises one or more slide members comprising bolts or pins that are arranged to slide along slots 102 formed in the ends of the adjacent grid members so as to allow the separation between the ends of the grid members to vary in a longitudinal direction, i.e. X or Y direction. The cooperation of the sliding bolts with the slots 102 is clearly shown in Figure 21. The length of travel of the ends of the grid members is determined by the length of the slots 102, wherein opposing ends of each of the slots 102 function as a stop to prevent further separation of the ends of the grid members. Once the one or more bolts extending through the slots reach their end of travel determined by the length of the slots, the ends of the grid members are prevented from further movement. The one or more bolts extending through the slots can each comprise a slide bearing 104 (see Figure 21), or alternatively a roller bearing, to assist with the sliding of the bolts along the slots. Whilst the sliding connection in the particular embodiment shown in Figure 22(a to c) shows the slots formed in the ends of the grid members, the reverse is true where the slots are formed in the bracket joining the ends of the grid members together and the bolts fastening the bracket to the ends of the grid members are arranged to slide along the slots in the bracket.

The different stages of separation of the ends of the grid members 18, 20 are shown in Figure 22(a to c). Figure 22a shows the ends of the grid members in a closed configuration and Figures 22b to 22c show the different stages in the separation of the ends of the grid members as the adjacent grid members move in a longitudinal direction up to a maximum limit determined by the length of the slot 102. The one or more bolts extending through the slots 102 can function as a mechanical fuse 94 that is configured to break when the pulling force acting on the bridging joint assembly exceeds or is equal to the predetermined load so as to cause the different regions of the grid structure to separate. The length of the slots and thus the separation of the ends of the adjacent grid members is calculated based on the level of movement of the grid members as a result of expansion and contraction of the grid members. Typically, in a normal operation, the length of the slots allows for a movement in the range of about 10mm to about 180mm movement of the grid members in either the X or Y direction as a result of thermal expansion. Where movement of the grid structure generates a pulling force to cause the grid members to move beyond a predetermined length, then the ends of the slots prevent this further movement of the grid members. However, where the pulling force on the bridging joint assembly exceeds or is equal to the predetermined load, the bolts are configured to break as they reach the ends of their respective slots 102 allowing the ends of the grid members to break apart so separating different regions of the grid structure. In the particular embodiment of the present invention shown in Figure 21 and 22, the grid members connected by the bracket 92 is an I beam. Slots 102 are formed in the ends of the I beams that cooperate with the mechanical fuse 94 fastening the bracket 92 to the ends of the grid members.

To provide a continuous track surface on the grid members 18, 20 as the ends of the grid members separate, the bridging joint assembly 88 further comprises an expansion joint comprising a first track element 106 and a second track element 108 and a bridging member 110 extending across the ends of the first and second track elements 106, 108. The first track element 106 is arranged on one end of the adjacent grid member and the second track element 108 is arranged to overlap the other end of the adjacent grid member. The bridging member extends 110 across the ends of the first and second track elements 106, 108. Each of the first and second track elements and the bridging member 110 represent at least a portion of a single elongate track element. Thus, the first and second track elements and the bridging member have respective interface portions that are profiled to mate to form a single elongate track element providing a continuous track surface.

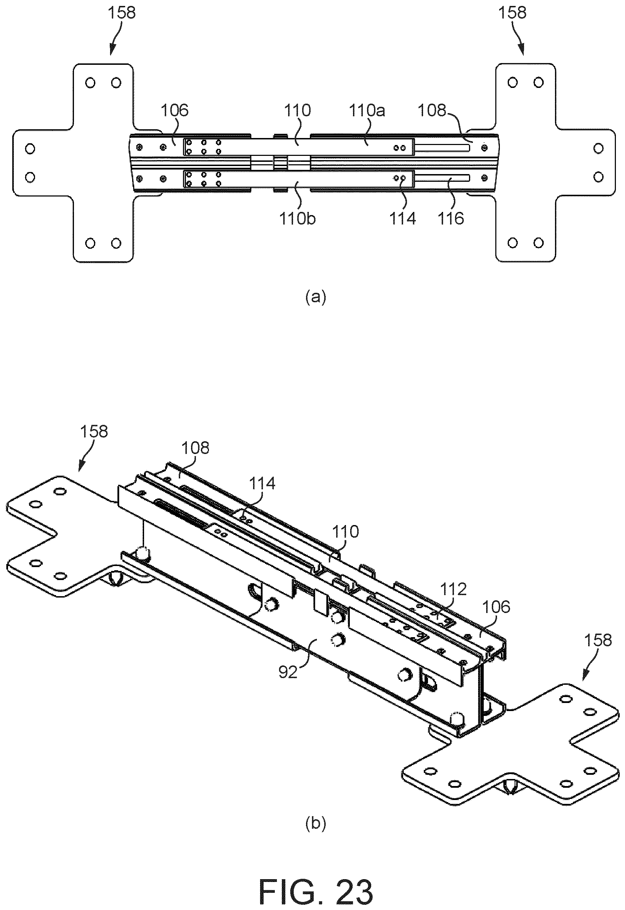

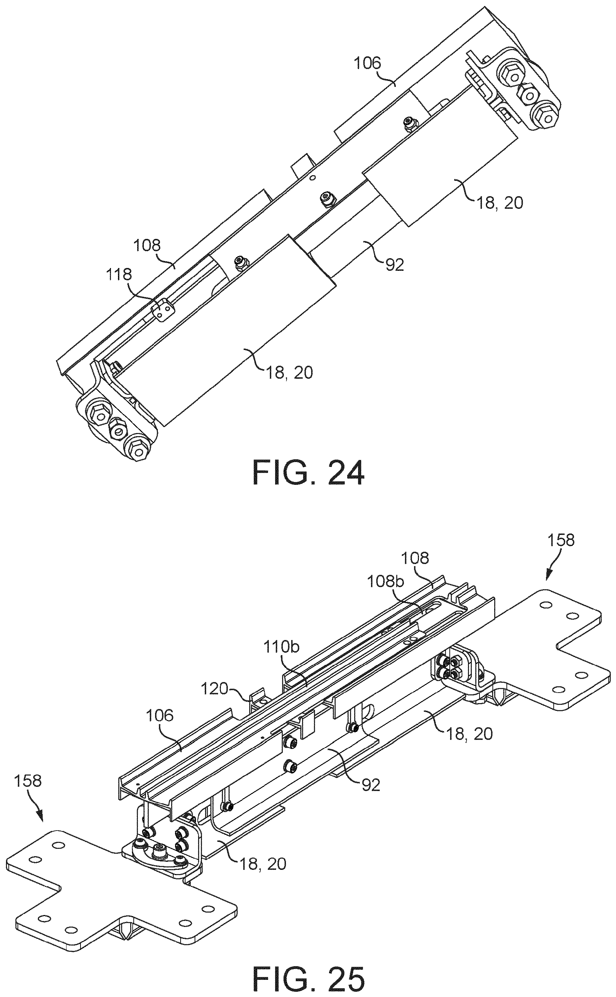

The upper surface of the bridging member 110 is profiled so that there is a transition along the expansion joint from the first track element to the second track element. In the particular example shown in Figures 23 (a and b), the profiles of the first and second track elements provide a double track comprising a central ridge and tracks either side of the central ridge. The upper profile of the bridging member 110 is shown as two track or rolling surfaces 110a, 110b that extend in a longitudinal direction across the distal ends of the grid members. The track surfaces of the bridging member 110 are arranged to provide a rolling surface for the wheels of the robotic load handling device. The rolling surface of the track surface extends across the width of the wheel of the robotic load handling device. The bridging member 110 has a first end 112 fixed to the first track element 106 and a second end 114 that is able to ride along grooves 116 formed in the second track element 108. For example, the second end 114 of the bridging member 110 comprises a sliding anchor 118 that is constrained to move along a guide 116 comprising a groove formed in the second track element as shown in Figure 24. Also shown in Figure 24 is the sliding anchor 118 extending through a groove in the end grid member 18, 20 supporting the second track element. As the ends of the adjacent grid members separate, the bridging member 110 bridges across the gap created between the ends of the adjacent grid members. In the particular example, shown in Figure 23b, the second end 114 of the bridging member 110 is arranged to overlap the second track element 108.

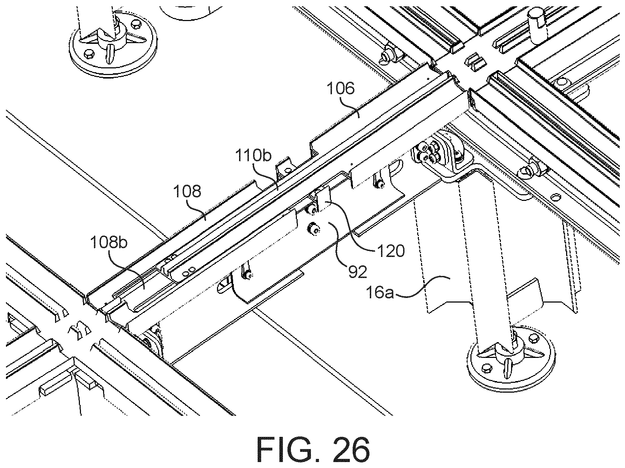

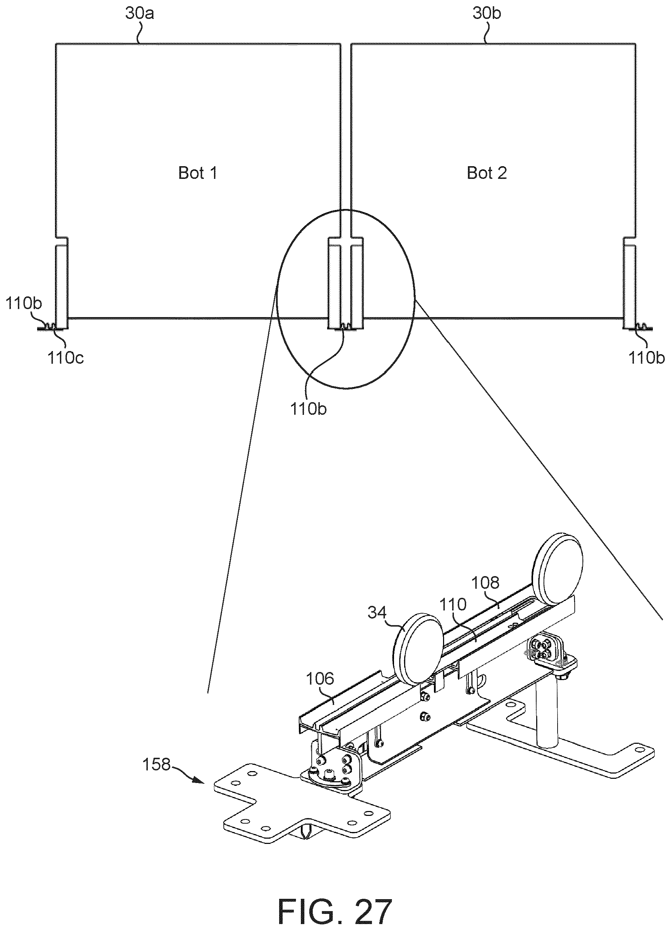

However, other means to bridge the gap across the first and second track elements as the ends of the adjacent grid members separate to provide a continuous track surface are applicable in the present invention. In the example shown in Figure 25 and its incorporation in the grid structure in Figure 26, the bridging member 110 can be formed as a protruding male part 110c of the first track element that is received in a correspondingly shaped recess 108b in the second track element 108. The bridging member 110 is shown in Figure 25 integrally formed with the first track element 106 as a protruding male part and the second track element comprises a receiving female part 108b. In comparison to the bridging member 110 shown in Figure 23(a and b) where the track surface 110a,b of the bridging member 110 extends across the width of the wheels, in the example shown in Figure 25, the track surface of the bridging member formed as a protruding male part 110c only has contact with at least half the width of the wheel as it transverses across the bridging member 110. The other half width of the wheel does not have any contact with the track surface of the protruding male part 110c. The robotic load handling device is prevented from derailing by the pair of wheels being constrained on either side of the vehicle body. This can be demonstrated by the schematic drawing shown in Figure 27, showing two robotic load handling devices 30a, 30b side by side on the tracks provided by a set of parallel bridging members 110 of the present invention, each bridging member 110 having a central lip or ridge 110d to constrain only one side of each wheel 34. As each robotic load handling device comprises a pair of wheels 34 at the front and rear of the vehicle body, restraining only one side of the wheels prevent lateral movement of the robotic load handling device on the tracks, and thereby prevents derailing of the robotic load handling device. In the particular example shown in Figure 27, the outside edge of the wheels of the load handling device is constrained by butting up against the central ridge 110d of the bridging member 110 as the ends of the adjacent grid members separate.

Typically, the bridging member 110 is a relatively thin strip of metal that is configured to bridge across the ends of the first and second track elements 106, 108 as the ends of the adjacent grid members separate so as to provide a continuous track surface across the ends of the first and second track elements. Considering that the weight of a robotic load handling device operative on the track can weigh in excess of 100kg, there is the risk that the bridging member 110 would bend under the weight of a robotic load handling device traveling across the bridging member 110. To prevent the bridging member from bending under the weight of a robotic load handling device operative on the tracks, the bridging joint assembly further comprises a support 120 intermediate the ends of the first and second track elements 106, 108 (see Figure 25 and 26). The upper end of the support 120 is profiled to cradle the bridging member 110 as the ends of the adjacent grid members separate (see Figure 25 and 26). In the particular embodiment shown in Figure 25, the support 120 is fixed to the bracket 92 by one or more bolts connecting the ends of the adjacent grid members together. The support 120 is shown fixed to the bracket 92 intermediate the ends of the first and second track elements 106, 108 such that when the ends of the grid members are brought together as shown in Figure 22a, the end of the adjacent grid members butt up against the support 120 so that the support functions as a spacer between the ends of the adjacent grid members.

In the particular examples shown in Figures 16 and 17, the same type of grid members make up the grid structure and as a result, the interconnections between the uprights and the grid members are largely provided by the same type of cap plates. In other words, the bridging joint assembly of the present invention used to connect different regions of the grid structure comprises the same type of grid members. In this particular example shown in Figure 16, the grid members comprise back-to-back C sections having substantially an I-shaped cross-sectional profile. Whilst using such grid member types to interconnect the upright members that make up the vertical storage columns ensures that the grid framework structure is able to cope with small changes in ground movement characteristic of a Type A or B seismic event, the same cannot be said for large changes in the ground movement characteristic of a Type D seismic event. To cater for the large deflections in the grid framework structure characteristic of a Type D seismic event, the grid members making up the grid structure would need to be more substantial in terms of flexural rigidity.

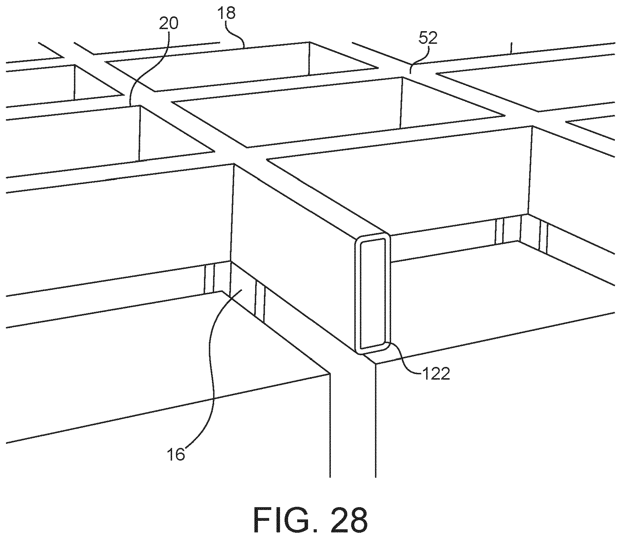

In the particular example of the present invention shown in Figure 28, the grid members 18, 20 making up a region of the grid structure largely comprise tubular beams 122 having a cross-section comprising a hollow centre section. The use of tubular beams 122 to construct the grid members in comparison to other shaped beams provides more resistance to bending since the walls of the tubular beam 122 are able to resist bending in all directions. The tubular cross-sectional profile of the grid members offers resistance to bending moments in multiple directions. To further improve the structural rigidity of the grid members to bending, the wall thickness of the grid members constructed as tubular beams is much greater than that of the grid members in a Type A or B grid structure discussed above. Furthermore, in comparison to bolting the grid members at the intersections where they cross, which are susceptible to loosening in a powerful seismic event, preferably the grid members are welded at the intersections 52. The welded joints at the intersections 52 provide a more sturdy and rigid joint at the intersections where the grid members cross. As the bending moments are transferred at the intersections, welding the grid members at the intersections 152 means that the joints are more able to resist loads at the intersections.

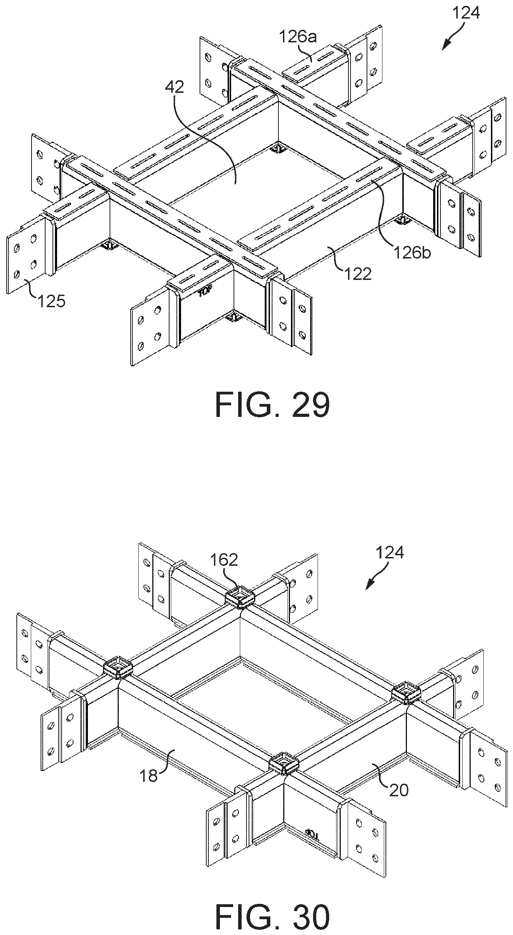

The grid structure is sub-divided into a plurality of sub-frames as shown in Figures 29 and 30, whereby one or more of the sub-frames 124 comprises at least one grid cell 42. Multiple sub-frames 124 are assembled together to build the grid structure on site. To comply with building regulations, ideally individual sub-frames are bolted together as it is assembled on-site. The ends of the grid elements making up the sub-frames comprise connecting portions 125 that are arranged to mate with corresponding connecting portions of an adjacent sub-frame. The connecting portions 125 comprise one or more holes to receive bolts.

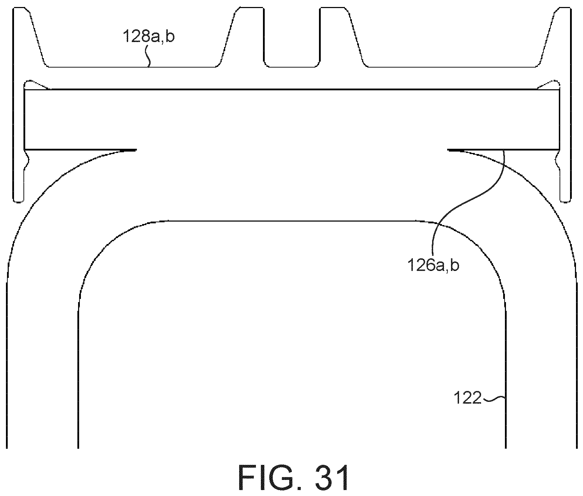

To provide a track or rail for the load handling device to travel on the grid, a separate track support element 126a, 126b is mounted directly to the grid element 122 (see Figure 31). The track support element 126a, b allows a track or rail 128a, b to be fitted to the grid elements 122. Multiple track support elements 126a,b are distributed on the grid elements 122 of the sub-frames 124 having a profile that is shaped to receive a track. Thus, in comparison to the grid elements of the grid framework structure discussed above where the track support elements are integrated into the grid elements of the grid (back to back C sections having a profile to receive a track by a snap fit arrangement), the track support elements 126a,b of the seismic grid framework structure are separate to the grid elements 122. Figure 29 shows a top view of the sub-frame 124 according to an embodiment of the present invention showing the track support elements 126a,b extending in the X and Y directions mounted directly to the tubular grid elements 122 and Figure 31 shows a cross sectional view of the sub-frame showing the engagement of the track 128a,b to the grid members 18, 20 by the track support element 126a,b according to an embodiment of the present invention. Like the track mounted to the grid element of the grid framework structure discussed above, the track 128a,b is fitted to the grid elements 122 in the seismic grid framework structure via the track support elements 126a,b by a snap-fit and/or slide fit arrangement.

As the seismic grid framework structure of the present invention does away with the cap plate to join the grid elements together since the grid elements are welded together at the intersections, to interconnect the vertical upright members to the grid of the seismic grid framework structure of the present invention, the spigot 162 for connecting to the upright columns 16 are directly mounted to the underside of the sub-frames 124 at the junction where the grid members cross (see Figure 30). In the particular embodiment of the present invention, a spigot 162 is welded to the underside of the sub-frame at the junction where the grid members 18, 20 cross, i.e. at the nodes of the grid structure. As shown in Figure 30, four spigots 162 can be seen mounted directly to the underside of the sub-frame 124 at the intersections where the grid members 18, 20 cross. However, other structurally flexural resistant beams can be used to increase the structural rigidity of the grid structure. These include but are not limited to I-beams.

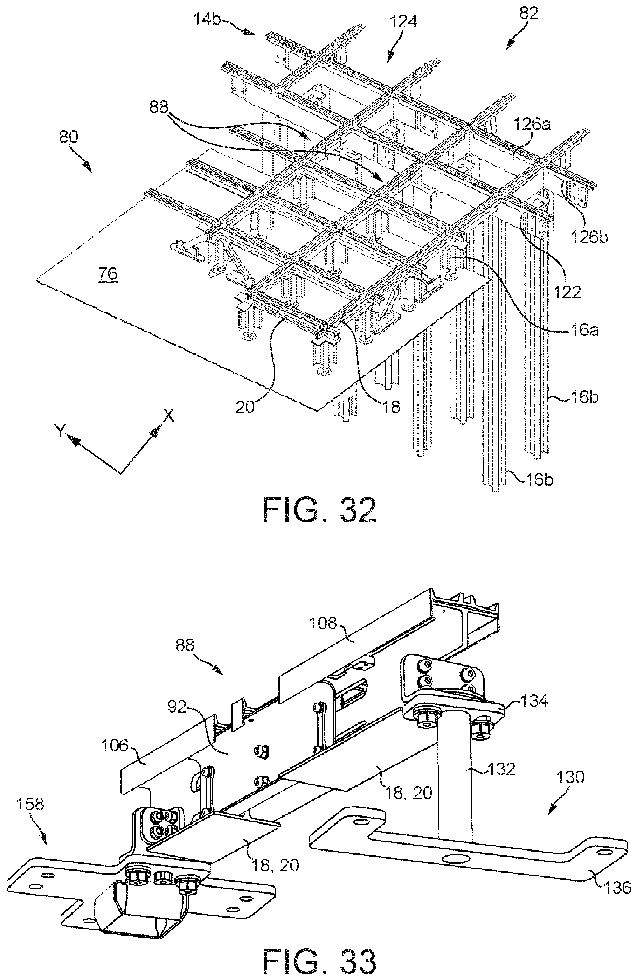

The Type D grid structure is more suitable where the grid members of the grid structure experience increased bending moments and stress due to ground movement. Since the grid members above the vertical storage columns are susceptible to increased bending moments due to the height or length of the vertical upright members for the storage of a plurality of storage containers in vertical stacks, the grid members making up the grid structure above the vertical storage columns tend to be constructed from more flexural resistant beams, e.g. tubular beams as discussed above. However, the other regions of the grid structure, namely above the mezzanine level, do not necessarily need to have the same level of structural rigidity as the grid structure above the vertical storage columns and can be based on a lesser flexural resistant beam, e.g. back-to-back C sections as discussed above. This is exemplified in a section of the grid framework structure shown in Figure 32 where different regions 80, 82 of the grid structure are made up from different types of grid members 18, 20. However, the problem with having a grid structure where different regions 80, 82 of the grid structure have different levels of structural rigidity is that the structurally rigid grid structure has the potential to bring down the weaker grid structure or at least cause substantial damage to the weaker grid structure during a strong seismic event characteristic of a Type D seismic event. The bridging joint assembly of the present invention is also able to link different regions of the grid structure, where each region of the grid structure comprises different types of grid members. In the particular example shown in Figure 32, the bridging joint assembly of the present invention is used to link a region 82 of the grid structure comprising tubular beams 122 and a region 80 of the grid structure comprising back-to-back C sections. However, the bridging joint assembly 88 of the present invention is not limited to the grid member types shown in Figure 32 and can be used to link any type of grid members from different regions of the grid structure together.

For ease of explanation, the grid structure comprising the weaker grid members can be termed a first region 80 of the grid structure 14b and the grid structure comprising the more structurally sound grid members can be termed the second region 82 of the grid structure 14b. The grid members making up the first region 80 of the grid structure can be termed a first type of grid members and can correspond to the grid members shown in Figure 10. Equally, the grid members making up the second region 82 of the grid structure can be termed a second type of grid members and can correspond to the grid member shown in Figure 28. As the grid members making up the first and second regions 80, 82 of the grid structure 14b are different in terms of shape and dimension, different brackets 158, 130 are required to connect the first and second regions 80, 82 of the grid structure 14b together incorporating the bridging joint assembly 88 of the present invention. The different brackets 158, 130 connecting the different regions 80, 82 of the grid structure 14b together are necessary to ensure that the grid level remains horizontal across the different regions of the grid structure. The bridging joint assembly 88 is arranged to connect the ends of adjacent grid members extending between the first and second regions of the grid structure as shown in Figure 33. The other respective ends of the adjacent grid members are connected to their upright members by a first 158 and second 130 type of bracket to compensate for the difference in height of the grid members making up the first and second regions 80, 82 of the grid structure. For ease of explanation, the adjacent grid members connected together by the bridging joint assembly of the present invention to form an elongated grid element can be referenced as first and second portions of the grid member linking the first and second regions of the grid structure. Thus, the first portion of the grid member is connected to an upright member by a first type bracket 158, and the second portion of the grid member is connected to a neighbouring upright member by a second type bracket 130. In the particular example shown in Figure 33, the first type bracket is a cap plate 158 as the grid members in the first region of the grid structure are the generally back-to-back C sections, i.e. first type grid member. However, as the grid members in the second region of the grid structure are different since they need to be more structurally resilient to ground movement, the second type bracket 130 comprises a pillar or spacer 132 having an uppermost end 134 connected to the end of the second portion of the grid member and a lowermost end 136 connected to an upright member, so as to accommodate the height difference of the grid members in the first region of the grid structure and to ensure that the tracks remain horizontal throughout the grid structure. The pillar or spacer 132 compensates for the difference in height between the grid structure in the first region and the grid structure in the second region. The grid members in the second region of the grid structure are generally tubular having a hollow cross-sectional profile as shown in Figure 28, i.e. second type grid member. In all cases, the bridging joint assembly 88 behaves similarly as discussed above where a mechanical fuse 90 is configured to preferentially break when a pulling force acting on the mechanical fuse exceeds or is equal to a predetermined load necessary to separate the first region of the grid structure from the second region of the grid structure.

**Two-way Expansion Joint**

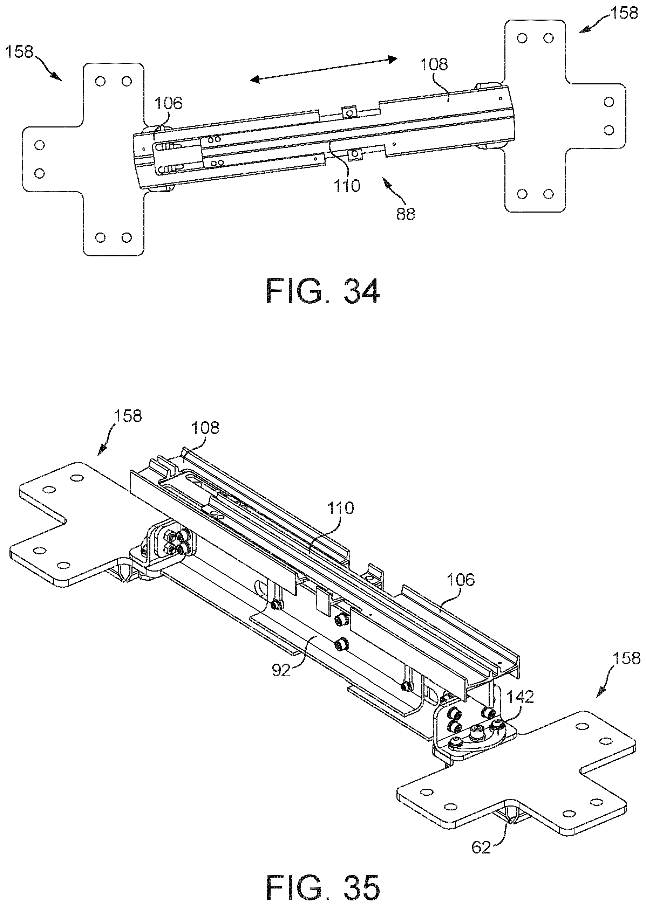

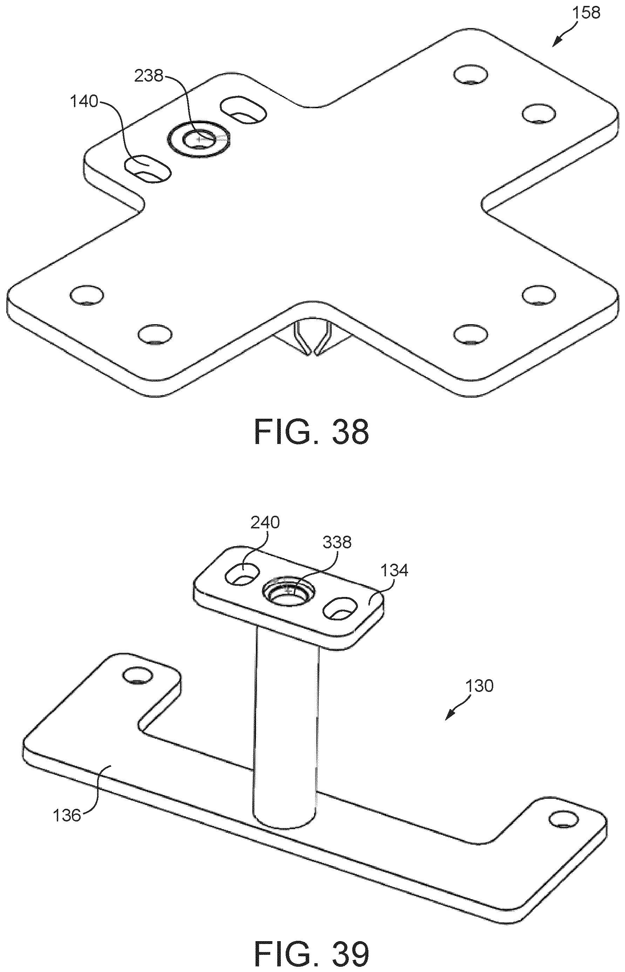

The expansion joint comprising a first track element 106 and a second track element 108 and a bridging member 110 extending across the ends of the first and second track elements is only able to compensate for movement of the grid members in a longitudinal direction (shown by the arrows in Figure 34) and therefore can only cover movement in either the X or Y direction. To compensate for movement of the grid members in both the X and the Y direction, separate expansion joints would need to link the ends of adjacent grid members extending in the X direction and in the Y direction so as to cover movement in both longitudinal directions. To compensate for movement of the grid members in both the X and Y direction in the present invention, at least one of the upright members is interconnected to a grid member by a connection comprising a pivotable joint such that the grid member is rotatable in a horizontal plane about a vertical axis extending through the pivotable joint. As the grid member is connected to the upright member by a bracket, in this case a cap plate 158, the pivotable connection exists between the cap plate and the end of the grid member as demonstrated in Figure 34. As discussed above, the cap plate 158 is constrained from rotational movement by the spigot 62 extending downwardly from the cap plate and being received in a correspondingly shaped hollow central section 46 of the vertical upright or upright member 16. The pivotable connection is provided by a bolt or bearing member extending through an opening 238 in a connecting portion of the cap plate 158 as shown in Figure 38.

Upon movement of the grid members as a result of expansion and/or contraction of the grid members, the pivotable connection is able to absorb the movement of the grid members in either the X or Y direction. Movement in a longitudinal direction is absorbed by the sliding relationship of the track elements 106, 108 discussed above. To incorporate both movements in the X and Y directions, at least one end of the grid members in the grid structure connected or joined together by the bridging joint assembly of the present invention is pivotally connected to its respective upright member.

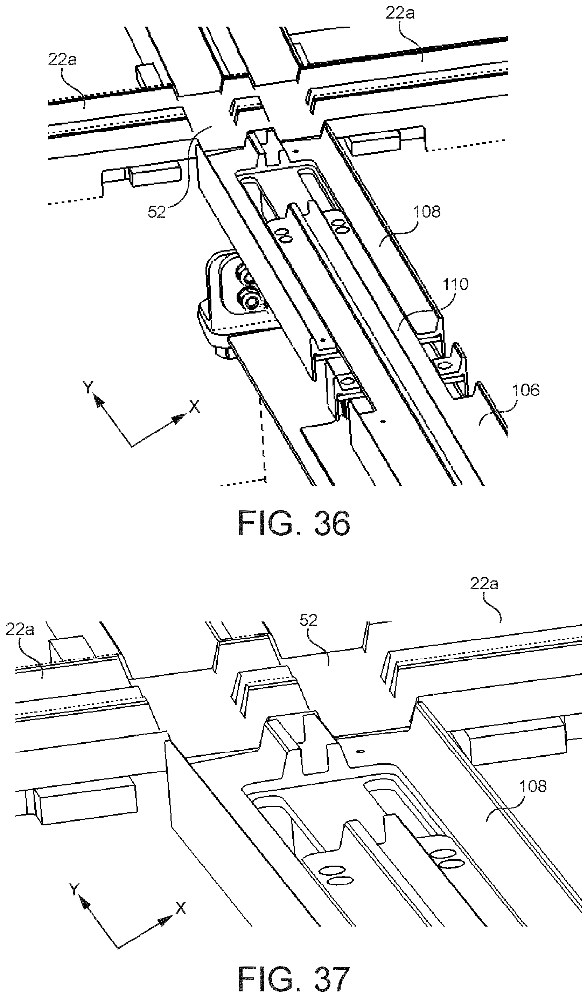

To better explain the concept of the pivotable joint together with the sliding relationship of the track elements to cover movements in both the X and Y direction, the relationship between the pivotable connection of the grid member and the sliding connection of the track elements positioned on the grid member is best described with reference to a first upright member 16a and a second upright member 16b (see Figure 32) that are interconnected by the grid members extending between both upright members as shown in Figures 34 and 35. In the particular example shown in Figure 34, the ends of adjacent grid members extending between the first and second upright members are connected together by the bridging joint assembly 88 of the present invention so as to allow movement of the grid members in a longitudinal direction. The first upright member is interconnected at its top end to the grid member by a connection comprising the pivotable joint such that the grid member is rotatable in the horizontal plane about a vertical axis extending through the pivotable joint upon movement of one of the first or second upright members relative to the other of the first or second upright members. In the particular example shown in Figure 34, the ends of the adj acent grid members 18, 20 extending between the first and second upright members are pivotally connected to their respective upright member so as to allow movement of one of the first or second upright member relative to the other of the first or second upright member. The rotation of the grid member causes a corresponding rotational movement of the track elements 106, 108 positioned on the grid member as demonstrated in the schematic drawing of a portion of the grid structure shown in Figures 36 and 37. This allows the tracks 22a,b to move laterally upon forces experienced in the X or Y direction. In the particular example shown in Figure 36, the track is allowed to move laterally in the horizontal plane in the X direction.

To accommodate movement in the longitudinal direction, the joint between the ends of the adjacent grid members comprising a first and second track element 106, 108 and a bridging member 110 extending across the first and second track elements allows one end of the bridging member to slide in a longitudinal direction (see Figure 36) - in this case, in the Y direction. Thus, the rotational movement of the connected grid members by the pivotable joint allows for movement of a portion of the grid structure in the X-direction and the bridging joint assembly connecting the ends of the grid members together allows for longitudinal movement in the Y-direction, .i.e. both X and Y movements can be covered by a single thermal expansion extending between adjacent vertical or upright members.

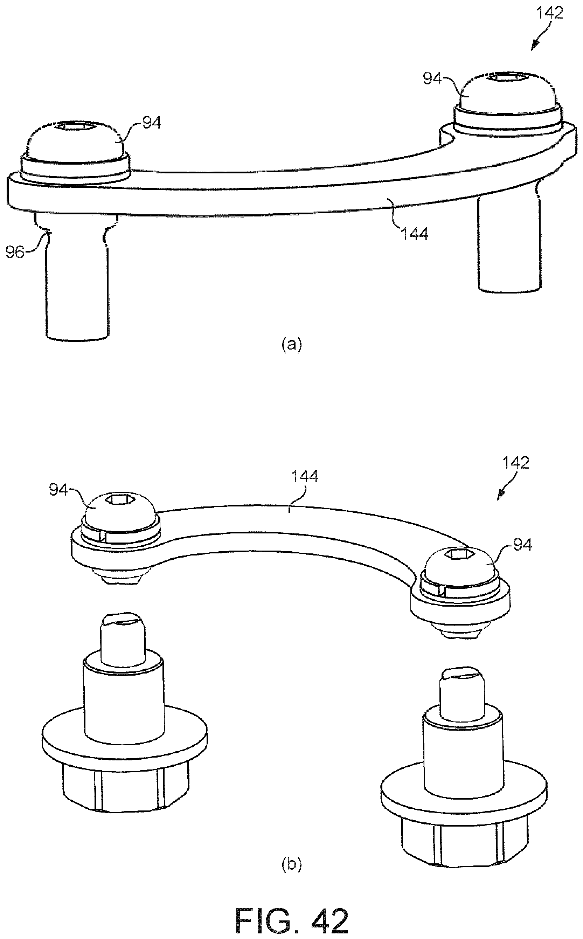

The movement of one of the first or second upright members relative to the other of the first or second upright member as a result of the pivotable joint connecting the grid member to the upright member displaces a track element relative to an adjacent track element in the region where the track elements intersect at the nodes 52 of the grid structure. This displacement causes the upper track profile to misalign, particularly at the nodes, as demonstrated in Figure 37. If the rotation of the grid member, and thus the rotation of the corresponding track is too excessive so as to disrupt the continuous track surface in the junction area where the track element meet at the node in the grid structure, there is a risk that the wheels of the robotic load handling device would derail when crossing an intersection of the track elements. To prevent excessive misalignment of the track elements as a result of rotation of the grid member about its pivotable connection with the upright member, the pivotal joint is limited to rotate a predetermined angle from its central or nominal position, where the predetermined angle is sufficiently small to enable the wheels of a robotic load handling device to traverse across the misaligned track elements. The pivotable joint is limited to rotate a predetermined angle by the provision of a stop member that is arranged to rotate in an arcuate slot having a radius of curvature centred about the pivotable joint. As shown in Figure 38, in addition to an opening 238 in a connection portion of the cap plate 158 to accommodate the pivotable joint between the end of the grid member and the cap plate, the connection portion of the cap plate 158 further comprises at least one arcuate slot 140 through which a stop member 142 (see Figure 35) extends therethrough such that the grid member connected to the cap plate 158 by the pivotable joint is rotatable through the predetermined angle defined by the arc of the arcuate slot 140. In the particular embodiment shown in Figures 42(a and b), the stop member 142 comprises a shear pin 146 having a break zone 96. The predetermined angle can be in the range of 1° to 20°, preferably in the range 5° to 20°. In operation, the stop member 142 received within the arcuate slot 140 is arranged to be guided by the arcuate slot 140 up to a limit determined by the ends of the arcuate slot 140. The grid member is prevented from further rotation when the stop member 142 butts up against the opposing ends of the arcuate slot 140. In the particular embodiment shown in Figure 38, two arcuate slots 140 are shown in the connecting portion of the cap plate/bracket laterally disposed either side of the pivotable joint, i.e. shown as opposing arcuate slots 140. Each of the arcuate slots 140 defines an arc having a radius of curvature centred about the pivotable joint and having a stop member 142 received therein.

The pivotable connection between the grid member and the upright member is not limited to a first type bracket comprising a cap plate 158 as shown in Figure 38 but can also be provided between the connection of the second type of bracket 130 and the Type D grid member discussed above, i.e. the second type of grid member (see Figures 33 and 39). Here, the uppermost connection 134 of the second type of bracket 130 comprises an opening 338 for accommodating a pivotable joint and an arcuate slot 240 having a radius of curvature centred about the pivotable joint. The lowermost connection 136 of the second type of bracket 130 is fixed to the upright member. Using the terminology discussed with reference to Figures 34 and 35, the lowermost connection 136 of the second type of bracket 130 is fixed to the second upright member 16b. In the particular example of the present invention shown in Figure 32, the first upright member 16a is shorter than the second upright member 16b. As a result, ground movement, e.g. during a seismic event, has a tendency to cause the longer second, upright members 16b to oscillate at a greater amplitude than the shorter, first upright members 16a. As discussed above, to compensate for the difference in the amplitude of oscillation of the first upright member 16a and the second upright member 16b, the Type D grid members or second type of grid members interconnecting the second upright members 16b in the second region of the grid structure are configured to provide greater structural integrity or rigidity during ground movement than the first type of grid members. As a result, the cross-sectional profile of the second type of grid members are differently sized, e.g. larger, than the cross-sectional profile of the first type of grid members. The second type of bracket 130 compensates for the difference in size between the first type grid members and the second type of grid members such that when the first region of the grid structure comprising the first type of grid members is linked or connected to the second region of the grid structure comprising the second type of grid members, the grid structure remain substantially horizontal.

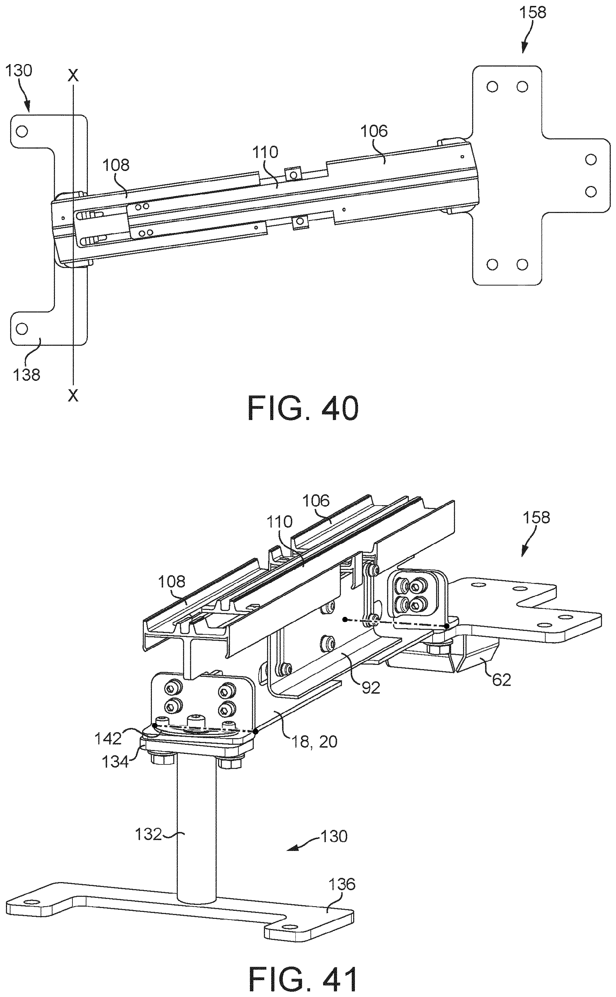

Tailoring the type of bracket used to interconnect the upright members to the grid members in the grid framework structure, the first upright member can be laterally displaced with respect to the second upright member by the pivotable connection between the grid members and their respective upright members irrespective of the type of bracket used to connect the grid members to the upright member (see Figure 40 and 41). Thus, expansion and contraction of the grid members in a longitudinal direction is provided by the movement of the first track element 106 relative to the second track element 108. The bracket 92 maintains the connection between the ends of the grid members supporting the first and second track elements 106, 108. Movement perpendicular to the longitudinal direction is provided by rotation of the grid member 18, 20 relative to its connecting upright member via the second type of bracket 130.

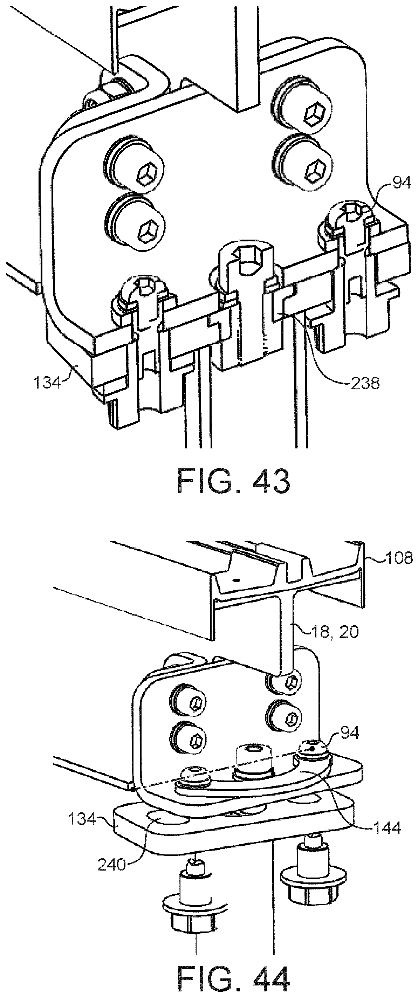

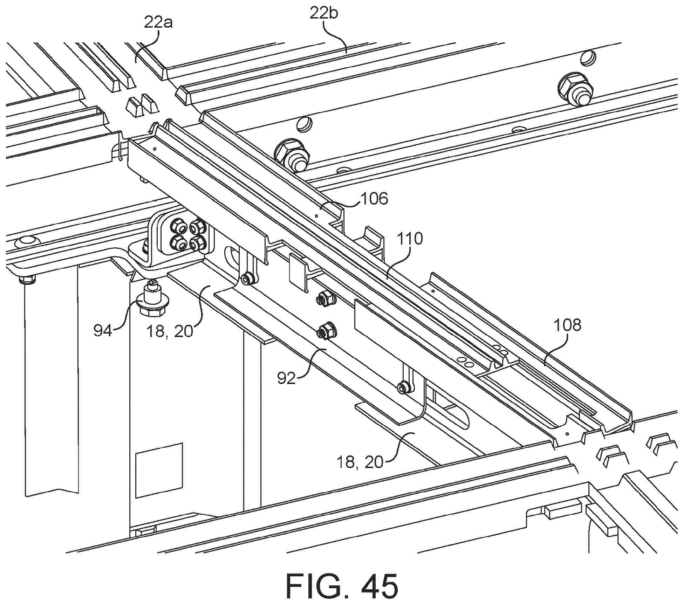

Should the force to rotate the grid member exceed a predetermined load characteristic of a seismic event, the stop member 142 can function as a mechanical fuse that is arranged to break when an applied load in the first or second direction generates a rotational force that exceeds the breaking point of the mechanical fuse. An example of a stop member 142 comprising a break zone 96 is shown in Figures 42(a and b) where Figure 42a shows the stop member 142 in the intact state and Figure 42b shows the stop member 142 in the broken state so allowing the grid member to rotate beyond the arc defined by the arcuate slot. Also shown in Figures 42(a and b) is an optional linkage 144 of the stop members either side of the pivotable joint so as to allow the shear pins 146 to move together in their respective arcuate slots 240 (see Figure 39). A cross section along the line X-X in Figure 40 of the pivotable connection between the upright member and the grid member incorporating the stop member 142 received within their respective arcuate slots 240 either side of the pivotable joint is shown in Figure 43 and 44. When the angle of rotation of the grid member exceeds the predetermined angle determined by the arc of the arcuate slot 240 as a result of applied forces substantially perpendicular to the longitudinal direction of the grid member, the mechanical fuse 94 of the stop member 142 breaks, allowing the grid member to rotate further to compensate for the movement of the grid member. This is demonstrated in the cross-section of the pivotable connection between the grid member 18, 20 and the upright member shown in Figure 44. To compensate for the effects of external forces distorting the grid structure and causing damage to the grid members and the tracks, the mechanical fuse 94 connecting a grid member to the upright member preferentially breaks allowing a grid member to rotate. In other words, the mechanical fuse 94 provides a sacrificial element in the grid structure that preferentially breaks to prevent or mitigate significant distortion of the grid structure. Where one or more interconnections of upright members to the grid members comprise a pivotable joint, the mechanical fuse allows a first region of the grid structure to move relative to a second region of the grid structure about the one or more pivotable connections. The effect of the rotation of adjacent grid members between the first and second regions of the grid structure as a result of the breakage of the mechanical fuse is demonstrated in the schematic drawing shown in Figure 45. Here, the track elements 106, 108 of the bridging joint assembly 88 are forced to rotate beyond the predetermined angle, resulting in a significant misalignment of the upper profile of the track elements with the adjoining tracks at the nodes of the grid structure. In the example shown in Figure 45, rotational movement of the track elements as a result of the pivotable joint results in a misalignment of the track elements 106,108 with respect to the track 22a, 22b at the node of the grid structure. The breakage of the mechanical fuse as a result of ground movement characteristic of a seismic event preserves the different regions of the grid structure from further damage, which in turn prevents regions of the grid structure inflicting injury from debris of the grid structure falling onto people below the grid structure, particularly below the mezzanine level.

Whilst the track elements of the expansion joint each have an interface or mating portion that enable the track elements to connect with each other to form a single elongate track element discussed above, the expansion joint relies on having differently shaped components for the first track element and the second track element to mate together. In other words, the interface portion of the respective track elements of the expansion joint have differently shaped mating profiles such that a single elongate track element is formed when the differently shaped mating profiles mate at their respective interface portions. For example in the embodiment of the thermal expansion joint shown in Figure 25, where the bridging member 110 is formed as a protruding male part 110b of the first track element that is received in a correspondingly shaped recess 108b in the second track element 108, it is necessary that the first and second track elements are differently shaped so as to connect together to form a single elongated track element.

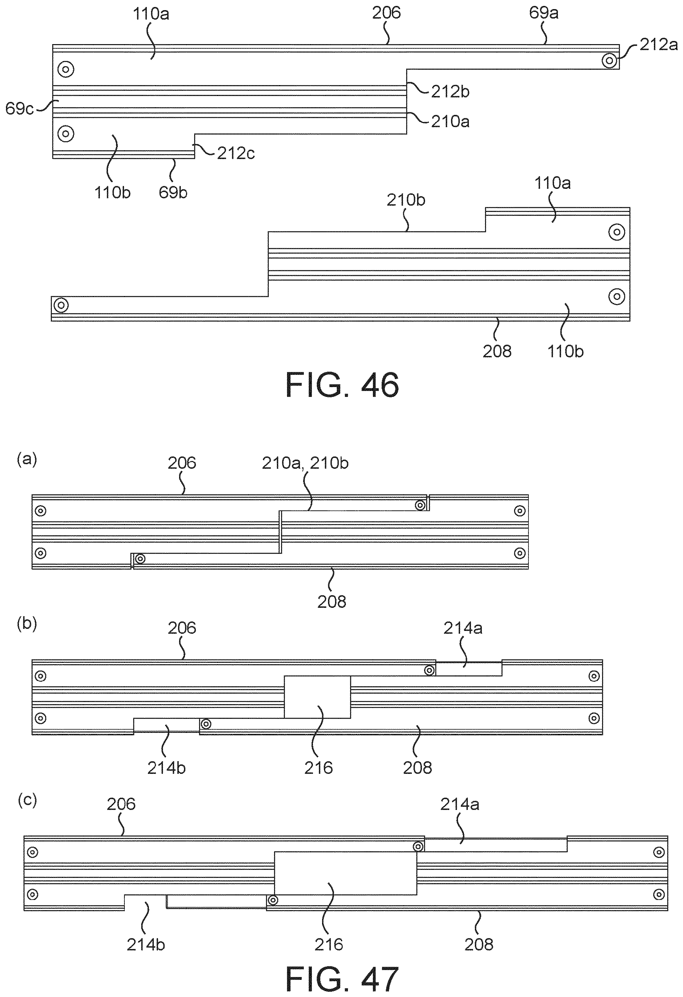

In another embodiment of the present invention shown in Figure 46, the interface portions 210a,b of the first and second track elements 206, 208 are shaped such that the interface portion 210b of the second track element 208 is a 180° rotation about a vertical axis of the interface portion 210a of the first track element 206. In other words, the interface portion 210a of the first track element 206 is a replica of the second track element 210 but is just rotated 180° about a vertical axis so as to enable the interface portions 210a,b of the first and second track elements to fit together to complete the double track surface 110a, 110b as shown in Figure 47 (a to c), i.e. form a single elongated track element extending in the first direction or the second direction. This has the advantage that only a single shaped track element is needed for both the first and second track elements which in turn, reduces the tooling costs in the fabrication of the thermal expansion joint. As the first 206 and second 208 track elements correspond to at least a portion of a single elongate track element, the first track element can be defined as a first track element portion and the second track element can be defined as a second track element portion. Thus, Figure 46 shows the first track element portion 206 and the second track element portion 208 that connect together at their respective interface portions to form a single elongate track element. In the particular embodiment of the present invention shown in Figure 46, the first and second track element portions are substantially identical but just rotated 180° about a vertical axis. Figure 47 (a to c) shown the stages where the first track element portion 206 and the second track element portion 208 are being brought together to form a single elongated track element extending in either of the first direction or the second direction.

For the purpose of the present invention, 180° rotation is construed to cover substantially 180° and is totally dependent on the profile of the interface portions of the first and the second track elements having a tolerance to enable them to connect together to form a single elongated track element extending in either the first direction or the second direction. The track surface is defined as a surface on which the wheels of the load handling device roll. The double track comprises guide surfaces 69a, 69b, 69c so as to constrain the wheels of the load handling device onto their respective track surface. In the particular embodiment of the present invention, the guide surfaces of a double track comprise opposing lips or ridges 69a, 69b (one lip on one side of the track and another lip at the other side of the track) running along each longitudinal edge of the track to guide or constrain each wheel from lateral movement on the track, and a central lip or ridge 69c running parallel with the lips along the edge of the track. The central lip or ridge 69c is at the same distance to each of the lips or ridges 69a, 69b at the edge of the track, so that the area between the central lip 69c and the lips 69a, 69b at the edges of the track provides two track surfaces 110a, 110b to allow the wheels of adjacent load handling devices to pass each other in both directions on the same track.

In the particular embodiment of the present invention, the interface portion 210a, 210b of each of the first and second track elements 206, 208 comprises three steps 212a, 212b, 212c that connect together when the first and second track elements 206, 208 are brought together such that the guide surfaces 69a, 69b on the outer edges of the respective track elements and the central guide surface 69c butt up so that they run continuously along the first and second track elements 206, 208 as shown in Figure 47(a). The wheel assembly of the load handling device, which comprises a pair of the wheels at the front and rear of the load handling device, is able to roll over the track surface across the first and second track elements 206, 208. Movement of the track elements as a result of thermal expansion provided by the sliding connection between the first and second track elements is shown in Figures 47(b and c). As the first and second track elements separate, gaps 214a, 214b, 216 are generated in the track surfaces between the first and second track elements 206, 208. The shape of the interface portion of the first and second track elements is such that two gaps 214a, 214b are staggered in the longitudinal direction of at least portion of the track; a first gap 214a in the first track surface 110a and a second gap 214b in the second track surface 110b, wherein the first gap 214a is offset from the second gap 214b in the longitudinal direction of the track. In addition to the first and second gaps 214a, 214b in the first and second track surfaces 110a, 110b, the central ridge 69c also separates to generate a central gap or third gap 216. The size of the first 214a, second 214b and third 216 gaps changes as the first and second track elements 206, 208 separate as demonstrated in Figures 47(b) and 47(c). The interface portions 210a, 210b of the first and second track elements 206, 208 are such that there is no continuous gap that extends laterally across the track when the first and second track elements are pulled apart. This is to prevent the wheels of the load handling device dropping or falling into the gaps as the first and second track elements separate.

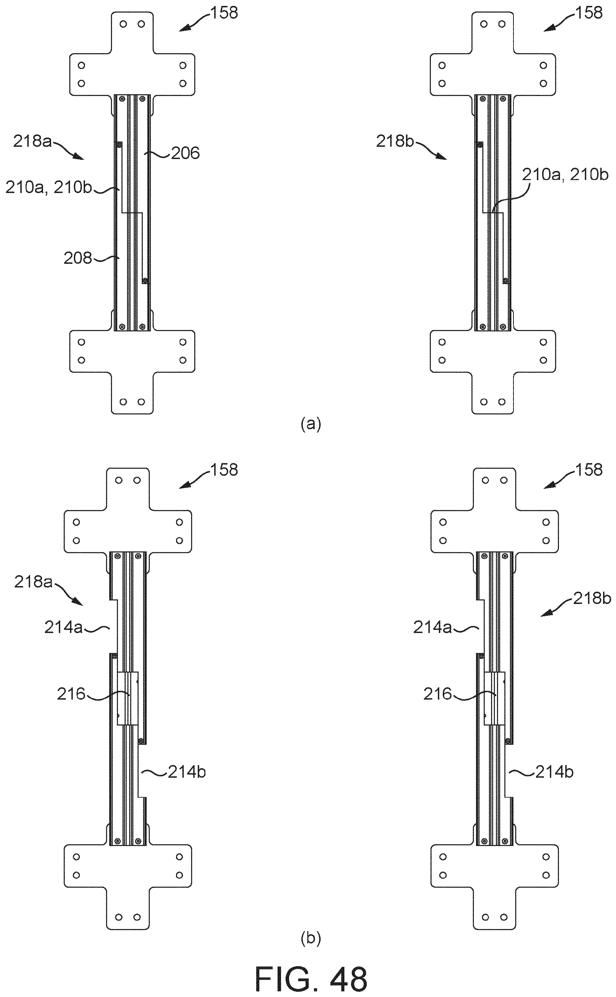

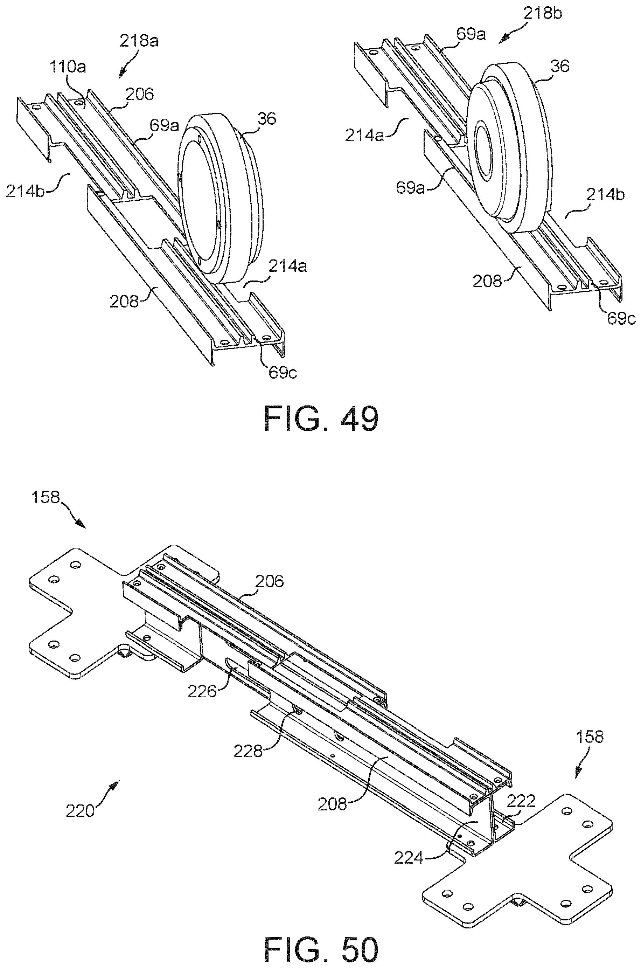

The staggered arrangement of the first and second gaps 214a, 214b are such that there is still a continuous track surface for the wheels of the load handling device to travel across the expansion joint when the first and second track elements separate. **In** other words, the interface portions 210a, 210b of the first and second track elements 206, 208 still overlap in a direction perpendicular to the longitudinal direction of the first and second track elements as they separate. This has the advantage that the wheels of the load handling device are still able to travel on their respective track surfaces as the first and second track elements separate. This is demonstrated in Figures 48 and 49 showing parallel set of tracks in the form of single elongated track elements, each track of the set of parallel tracks comprising the expansion joint of the present invention to allow the pairs of wheels at the front and rear of the load handling device to travel on the tracks. Constraining the wheels to the track surface by the guide surfaces as a result of the staggered arrangement of the gaps as the first and second track elements separate is demonstrated in Figure 49. As the wheels 36 move on the track surface of the first track element 206, the wheels 36 are constrained by the guide surface 69a at the edge of the first track element 206. **In** addition, as the first and second track elements separate, the width of the track surface in the junction area where they interface reduces, i.e. reduced by a half, such that only a half the width of the wheel is supported on a reduced portion of the track surface. When the wheels reach the end of the track surface of the first track element 206 and approach the gap 214a in the track surface, the constraint of the wheels on the track surface changes from being constrained by the guide surface 69a at the edge of the track element to being constrained by the central guide surface 69c as shown in Figure 49. Similarly, the wheels being constrained by the central guide surface 69c is transitioned to being constrained by one of the outer guide surfaces 69a,b when the first and second track elements separate.

**In** this way, the wheels are always being constrained on the track surface when travelling across the first and second track elements 206, 208 even when the first and second track elements separate. Again, the width of track surface reduces as the wheels of the load handling device move onto the track surface of the second track element such that only a half width of the wheels are supported by the track surface as they travel across the gap 214a. The wheels of the load handling device are supported by the full width of the track surface once the wheels of the load handling device cross the gap in the junction area between the first and second track elements.

A similar arrangement of constraining the wheels of the load handling device to their respective track surfaces when the first and second track elements separate is also demonstrated in Figures 24 to 27 where the first track element comprises a protruding male part that is receivable in a receiving female part of the second track element. This cannot be said about the embodiment of the track elements shown in Figure 23, where the bridging member comprises separate bridging elements providing two track surfaces 110a, 110b. As the first and second track elements separate, the bridging member 110 offers very little constraint to the wheels on their respective track surfaces, raising the risk that the wheels may derail from the track surface as the first and second track elements separate.

However, in contrast to arrangement of the first and second track elements in the embodiment shown in Figures 24 to 27, the gaps 214a, 214b in the track surfaces are staggered in the longitudinal direction such that when the first and second expansion joints are arranged in parallel, a gap in a first expansion joint 218a is always directly opposite a complete track surface in a second expansion joint 218b, the second expansion joint 218b being parallel to the first expansion joint 218a. The wheels of the load handling device travelling across the parallel first and second expansion joints 218a, 218b will experience only a single gap at any one time rather than multiple gaps at multiple times as in the embodiment shown in Figures 23 and 26. This reduces the amount of snagging or striking of the wheels with the gaps, which in turn reduces the magnitude of the clonking of the load handling device on the tracks. Contrast this configuration with the configuration of the expansion joint shown in Figure 23 and 26, where the front wheels experiences two gaps in the first and second expansion joints at the same time and the rear wheels experiences two gaps at the same time resulting in an increased level of snagging or striking of the wheels of the load handling device, which in turn, increases the clonking of the load handling device on the tracks. The only occasion in the embodiment shown in Figure 48(a and b) when the front and rear wheels experience multiple gaps at the same time is the gap 216 generated in the centre of the track surfaces of the first and second track elements when their respective central guide surfaces 69c separate. The most important advantage of the embodiment shown in Figure 46 is the ability to use a single type of track element for the first and second track elements, reducing the number of different parts necessary to assemble the grid structure.

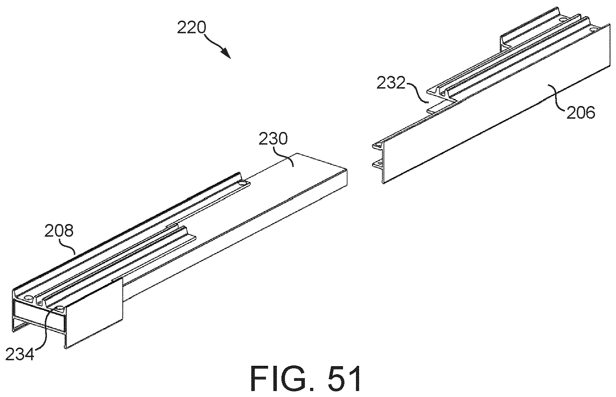

To allow the first track element to slide relative to the second track element, both track elements are supported on a sliding connection. There are numerous examples of the sliding connection according to the present invention. In the first example shown in Figure 50, the sliding connection 220 comprises back-to-back C sections 222, 224 similar to the track support element 56 discussed above with reference to Figure 10 but are arranged to slide relative to each other in a junction area where the track elements overlap. The sliding connection in the junction area where the track elements overlap is provided by a slot 226 and slide bearing 228 arrangement, in which one end of the C section comprises a slot that cooperates with a slide bearing connecting the C sections together. In another example shown in Figure 51, the sliding connection supporting the first and second track elements 206, 208 comprises a plate or bar 230. Both the first and second track elements 206, 208 have an opening or recess 232 for receiving the ends of the plate 230 in a sliding connection. In the particular embodiment shown in Figure 51, the first and second track elements 206, 208 are box sections for receiving the ends of the plate 230. One end of the plate is secured to the first track element as shown in Figure 51 using suitable fasteners 234, e.g. bolts, screws, pins, and the second end of the plate is receivable in the recess or opening 232 of the second track element 208. When received in their respective recesses in the first and second track elements, the surface of the plate supports the upper track profile of the first and second track elements from buckling under the weight of a load handling device travelling on the track elements.

As with the other embodiments discussed above, the expansion joint in the embodiment discussed with reference to Figures 46 to 51 can form part of the bridging joint assembly for connecting different regions of the grid structure as discussed above. Cap plates 158 are shown in Figure 50 for interconnecting adjacent upright members by the track support elements supporting the first and second track elements. Here, the ends of the track support elements are connected to their respective cap plate that is used for fixing to an upright member. In addition, a mechanical fuse can be used to connect the track supports to the upright members via the cap plate. In the case where the track support elements are back-to-back C sections shown in Figure 50, the mechanical fuse can be incorporated into the slide bearing in the junction area where the back-to-back C sections overlap. Alternatively, the mechanical fuse can be incorporated into fasteners used to connect one of the track supports elements to its respective cap plate.

Various modifications of the illustrative embodiments which are apparent to the person skilled in the art within the scope of the present invention as defined in the claims are deemed to fall within the scope of the present invention. For example, a combination of a mechanical fuse can be used to interconnect the at least one of the plurality of upright members to the grid members via a cap plate together with a mechanical fuse used to connect the ends of adjacent grid members via the bridging joint assembly.

## Claims

1. A grid framework structure (14) for supporting a load handling device (30) operative to move one or more containers (10), said grid framework structure comprising:

   a plurality of upright members (16) arranged to form a plurality of vertical locations for one or more containers to be guided by the upright member in a vertical direction,
   wherein the plurality of upright members (16) are interconnected to define nodes (52) at their top ends by a plurality of grid members (18, 20) arranged in a grid pattern, the grid members comprising a first set of grid members (18) extending in a first direction and a second set of grid members (20) extending in a second direction, the second set of grid members running transversely to the first set of grid members in a substantially horizontal plane to form a grid structure (50) comprising a plurality of grid cells (42),
   the grid structure (50) comprising a track system positioned on the plurality of grid members, the track system comprising a plurality of tracks (22a, 22b) arranged in the grid pattern,
   the grid structure (50) comprising a first region (80) and a second region (82),
   wherein the grid framework structure further comprises a bridging joint assembly arranged as one or more connections between the first region of the grid structure and the second region of the grid structure,
   **characterised in that** said bridging joint assembly comprising at least one mechanical fuse (90) that is arranged to break under an applied load greater than or is equal to a predetermined load, said predetermined load being lower than the load for breaking the interconnections between the plurality of upright members and the plurality of grid members (18, 20) of the grid structure (50) so as to allow the first region of the grid structure to separate from the second region of the grid structure when the applied load exceeds the predetermined load.

2. The grid framework structure (14) of claim 1, wherein the at least one mechanical fuse (90) comprises at least one shear pin (146) that is configured to break when the applied load in a direction parallel to the first or the second direction exceeds the predetermined load.

3. The grid framework structure (14) of claim 1 or 2, wherein the bridging joint assembly (88) is configured for connecting the ends of adjacent grid members in the grid structure (50).

4. The grid framework structure (14) of claim 3, wherein the bridging joint assembly (88) comprises at least one bracket (92) that is arranged to connect the ends of adjacent grid members by a plurality of fasteners, and wherein at least one of the plurality of fasteners comprises the at least one mechanical fuse (90) such that the bracket (92) is arranged to separate from at least one end of the adjacent grid members when the applied load on the at least one mechanical fuse exceeds the predetermined load; and, optionally, the bridging joint assembly (88) comprises at least one slide bearing (104) that is arranged to cooperate with a slot (102) in the bracket and/or the at least one end of the adjacent grid members in a junction area where the at least one bracket is arranged to overlap the at least one end of the adjacent grid member so as to enable the at least one bracket and the at least one end of the adjacent grid members to slide relative to each other.

5. The grid framework structure (14) of claim 4, wherein the at least one bracket (92) comprises a first and second bracket arranged on opposing sides of the at least one end of the adjacent grid members.

6. The grid framework structure (14) of any of the preceding claims, wherein the bridging joint assembly (88) is arranged to connect at least one of the plurality of upright members (16) to at least one of the plurality of grid members; and, optionally, the bridging joint assembly comprises a cap plate (158), said cap plate (158) being cross shaped having four connecting portions for connecting to separate grid members in the grid structure and wherein at least one of the four connecting portions is connected to a grid member by the at least one mechanical fuse.

7. The grid framework structure (14) of any of the preceding claims, wherein the bridging joint assembly (88) further comprises an expansion joint comprising a first track element (106) and a second track element (108), a bridging member (110) extending across the ends of the first and second track elements (106, 108) so as to provide a continuous track surface extending longitudinally in the first or second direction across the ends of the first and second track elements; optionally, the bridging member (110) has a first end attached to the first track element (106) and a second end moveable relative to the second track element (108); optionally, the second end of the bridging member (110) is configured to be received in a correspondingly shaped recess (108b) in the second track element; optionally, the second end of the bridging member (110) is arranged to overlap the second track element (108); optionally, the bridging member (110) further comprises a guide member constrained to slide along a groove in the second track element (108); and, optionally, the bridging joint assembly (88) further comprising a support arranged to support the bridging member in a junction area between the ends of the first and second track elements.

8. The grid framework structure (14) of any of the preceding claims, wherein the first region (80) of the grid structure is arranged on a mezzanine level.

9. The grid framework structure (14) of any of the preceding claims, wherein the first region of the grid structure comprises one or more ports through which storage containers can be transferred out of and/or into the grid framework structure.

10. The grid framework structure (14) of the preceding claims, wherein at least a portion of the plurality of upright members (16) are arranged to form a plurality of vertical storage columns for one or more storage containers to be stacked between the at least portion of the plurality of the upright members; and, optionally, the second region (82) of the grid structure is arranged above the at least portion of the plurality of upright members (16) forming the plurality of vertical storage columns.

11. The grid framework structure (14) of claim 10, wherein the plurality of upright members comprises a first and second set of upright members (16a, 16b), the at least portion of the plurality of upright members defining the second set of upright members (16b) such that the first region of the grid structure is arranged above the first set of upright members; and, optionally, the length of the first set of upright members (16a) is different to the second set of upright members (16b).

12. The grid framework structure (14) of any of the preceding claims, wherein the plurality of grid members comprises a plurality of a first type of grid members arranged in the grid pattern to define the first region of the grid structure and a plurality of a second type of grid members arranged in the grid pattern to define the second region of the grid structure, the first type of grid members being different to the second type of grid members; and, optionally, each grid member of the plurality of the second type grid members has a greater flexural strength than each grid member of the plurality of the first type grid member.

13. A storage and retrieval system (1) comprising:

    i) a grid framework structure (14) as defined in any of the claims 1 to 12;

    ii) a plurality of stacks of containers (10) arranged in storage columns located below the grid, wherein each storage column is located vertically below a grid cell;
    iii) a plurality of load handling devices (30) for lifting and moving containers stacked in the stacks, the plurality of load handling devices being remotely operated to move laterally on the grid above the storage columns to access the containers through the grid cells, each of said plurality load handling devices comprises:

        a) a wheel assembly (34, 36) for guiding the load handling device on the grid;
        b) a container-receiving space (40) located above the grid; and
        c) a lifting device (39) arranged to lift a single container from a stack into the container-receiving space.

**Patentansprüche**

1. Gitterrahmenstruktur (14) zum Tragen einer Lasthandhabungsvorrichtung (30), die betreibbar ist, um einen oder mehrere Behälter (10) zu bewegen, wobei die Gitterrahmenstruktur Folgendes umfasst:

    eine Vielzahl von aufrechten Elementen (16), die angeordnet sind, um eine Vielzahl von vertikalen Stellen für einen oder mehrere Behälter zu bilden, die durch das aufrechte Element in einer vertikalen Richtung geführt werden sollen, wobei die Vielzahl von aufrechten Elementen (16) miteinander verbunden sind, um Knoten (52) an ihren oberen Enden durch eine Vielzahl von Gitterelementen (18, 20) zu definieren, die in einem Gittermuster angeordnet sind, wobei die Gitterelemente einen ersten Satz von Gitterelementen (18), die sich in einer ersten Richtung erstrecken, und einen zweiten Satz von Gitterelementen (20), die sich in einer zweiten Richtung erstrecken, umfassen, wobei der zweite Satz von Gitterelementen quer zu dem ersten Satz von Gitterelementen in einer im Wesentlichen horizontalen Ebene verläuft, um eine Gitterstruktur (50) zu bilden, die eine Vielzahl von Gitterzellen (42) umfasst,
    wobei die Gitterstruktur (50) ein Schienensystem umfasst, das auf der Vielzahl von Gitterelementen positioniert ist,
    wobei das Schienensystem eine Vielzahl von Schienen (22a, 22b) umfasst, die in dem Gittermuster angeordnet sind,
    wobei die Gitterstruktur (50) einen ersten Bereich (80) und einen zweiten Bereich (82) umfasst,
    wobei die Gitterrahmenstruktur ferner eine Überbrückungsverbindungsanordnung umfasst, die als eine oder mehrere Verbindungen zwischen dem ersten Bereich der Gitterstruktur und dem zweiten Bereich der Gitterstruktur angeordnet ist,

**dadurch gekennzeichnet, dass** die Überbrückungsverbindungsanordnung mindestens eine mechanische Sicherung (90) umfasst, die angeordnet ist, um unter einer angelegten Last zu brechen, die größer als oder gleich einer vorbestimmten Last ist, wobei die vorbestimmte Last niedriger als die Last zum Brechen der Verbindungen zwischen der Vielzahl von aufrechten Elementen und der Vielzahl von Gitterelementen (18, 20) der Gitterstruktur (50) ist, um zu ermöglichen, dass sich der erste Bereich der Gitterstruktur von dem zweiten Bereich der Gitterstruktur trennt, wenn die angelegte Last die vorbestimmte Last überschreitet.

2. Gitterrahmenstruktur (14) nach Anspruch 1, wobei die mindestens eine mechanische Sicherung (90) mindestens einen Scherstift (146) umfasst, der konfiguriert ist, um zu brechen, wenn die angelegte Last in einer Richtung parallel zu der ersten oder der zweiten Richtung die vorbestimmte Last überschreitet.

3. Gitterrahmenstruktur (14) nach einem der Ansprüche 1 oder 2, wobei die Überbrückungsverbindungsanordnung (88) zum Verbinden der Enden benachbarter Gitterelemente in der Gitterstruktur (50) konfiguriert ist.

4. Gitterrahmenstruktur (14) nach Anspruch 3, wobei die Überbrückungsverbindungsanordnung (88) mindestens eine Halterung (92) umfasst, die angeordnet ist, um die Enden benachbarter Gitterelemente durch eine Vielzahl von Befestigungselementen zu verbinden, und wobei mindestens eines der Vielzahl von Befestigungselementen die mindestens eine mechanische Sicherung (90) umfasst, sodass die Halterung (92) angeordnet ist, um sich von mindestens einem Ende der benachbarten Gitterelemente zu trennen, wenn die angelegte Last auf die mindestens eine mechanische Sicherung die vorbestimmte Last überschreitet; und optional die Überbrückungsverbindungsanordnung (88) mindestens ein Gleitlager (104) umfasst, das angeordnet ist, um mit einem Schlitz (102) in der Halterung und/oder dem mindestens einen Ende der benachbarten Gitterelemente in einem Kreuzungsbereich zusammenzuwirken, wo die mindestens eine Halterung angeordnet ist, um das mindestens eine Ende des benachbarten Gitterelements zu überlappen, um zu ermöglichen, dass die mindestens eine Halterung und das mindestens eine Ende der benachbarten Gitterelemente relativ zueinander gleiten.

5. Gitterrahmenstruktur (14) nach Anspruch 4, wobei die mindestens eine Halterung (92) eine erste und eine zweite Halterung umfasst, die auf gegenüberliegenden Seiten des mindestens einen Endes der benachbarten Gitterelemente angeordnet sind.

6. Gitterrahmenstruktur (14) nach einem der vorhergehenden Ansprüche, wobei die Überbrückungsverbindungsanordnung (88) angeordnet ist, um mindestens eines der Vielzahl von aufrechten Elementen (16) mit mindestens einem der Vielzahl von Gitterelementen zu verbinden; und optional die Überbrückungsverbindungsanordnung eine Abdeckplatte (158) umfasst, wobei die Abdeckplatte (158) kreuzförmig ist und vier Verbindungsabschnitte zum Verbinden mit getrennten Gitterelementen in der Gitterstruktur aufweist und wobei mindestens einer der vier Verbindungsabschnitte durch die mindestens eine mechanische Sicherung mit einem Gitterelement verbunden ist.

7. Gitterrahmenstruktur (14) nach einem der vorhergehenden Ansprüche, wobei die Überbrückungsverbindungsanordnung (88) ferner eine Dehnungsverbindung umfasst, die ein erstes Schienenelement (106) und ein zweites Schienenelement (108) umfasst, wobei sich ein Überbrückungselement (110) über die Enden des ersten und des zweiten Schienenelements (106, 108) erstreckt, um eine kontinuierliche Schienenoberfläche bereitzustellen, die sich in Längsrichtung in der ersten oder der zweiten Richtung über die Enden des ersten und des zweiten Schienenelements erstreckt; optional das Überbrückungselement (110) ein erstes Ende, das an dem ersten Schienenelement (106) befestigt ist, und ein zweites Ende, das relativ zu dem zweiten Schienenelement (108) beweglich ist, aufweist;

optional das zweite Ende des Überbrückungselements (110) konfiguriert ist, um in einer entsprechend geformten Ausnehmung (108b) in dem zweiten Schienenelement aufgenommen zu werden; optional das zweite Ende des Überbrückungselements (110) angeordnet ist, um das zweite Schienenelement (108) zu überlappen; optional das Überbrückungselement (110) ferner ein Führungselement umfasst, das eingeschränkt ist, um entlang einer Nut in dem zweiten Schienenelement (108) zu gleiten; und optional die Überbrückungsverbindungsanordnung (88) ferner eine Stütze umfasst, die angeordnet ist, um das Überbrückungselement in einem Kreuzungsbereich zwischen den Enden des ersten und des zweiten Schienenelements zu stützen.

8. Gitterrahmenstruktur (14) nach einem der vorhergehenden Ansprüche, wobei der erste Bereich (80) der Gitterstruktur auf einer Mezzaninebene angeordnet ist.

9. Gitterrahmenstruktur (14) nach einem der vorhergehenden Ansprüche, wobei der erste Bereich der Gitterstruktur eine oder eine Vielzahl von Öffnungen umfasst, durch die Lagerbehälter aus der Gitterrahmenstruktur heraus und/oder in diese hinein überführt werden können.

10. Gitterrahmenstruktur (14) nach einem der vorhergehenden Ansprüche, wobei mindestens ein Abschnitt der Vielzahl von aufrechten Elementen (16) angeordnet ist, um eine Vielzahl von vertikalen Lagersäulen für einen oder mehrere Lagerbehälter zu bilden, die zwischen dem mindestens einen Abschnitt der Vielzahl von aufrechten Elementen gestapelt werden sollen; und optional der zweite Bereich (82) der Gitterstruktur über dem mindestens einen Abschnitt der Vielzahl von aufrechten Elementen (16) angeordnet ist, der die Vielzahl von vertikalen Lagersäulen bildet.

11. Gitterrahmenstruktur (14) nach Anspruch 10, wobei die Vielzahl von aufrechten Elementen einen ersten und einen zweiten Satz von aufrechten Elementen (16a, 16b) umfasst, wobei der mindestens eine Abschnitt der Vielzahl von aufrechten Elementen den zweiten Satz von aufrechten Elementen (16b) definiert, so dass der erste Bereich der Gitterstruktur über dem ersten Satz von aufrechten Elementen angeordnet ist; und optional die Länge des ersten Satzes von aufrechten Elementen (16a) sich von der des zweiten Satzes von aufrechten Elementen (16b) unterscheidet.

12. Gitterrahmenstruktur (14) nach einem der vorhergehenden Ansprüche, wobei die Vielzahl von Gitterelementen eine Vielzahl eines ersten Typs von Gitterelementen, die in dem Gittermuster angeordnet sind, um den ersten Bereich der Gitterstruktur zu definieren, und eine Vielzahl eines zweiten Typs von Gitterelementen, die in dem Gittermuster angeordnet sind, um den zweiten Bereich der Gitterstruktur zu definieren, umfasst, wobei sich der erste Typ von Gitterelementen von dem zweiten Typ von Gitterelementen unterscheidet; und optional jedes Gitterelement der Vielzahl von Gitterelementen des zweiten Typs eine größere Biegefestigkeit als jedes Gitterelement der Vielzahl von Gitterelementen des ersten Typs aufweist.

13. Lager- und Entnahmesystem (1), umfassend:

    i) eine Gitterrahmenstruktur (14) nach einem der Ansprüche 1 bis 12;
    ii) eine Vielzahl von Stapeln von Behältern (10), die in Lagersäulen angeordnet sind, die sich unter dem Gitter befinden, wobei sich jede Lagersäule vertikal unter einer Gitterzelle befindet;
    iii) eine Vielzahl von Lasthandhabungsvorrichtungen (30) zum Heben und Bewegen von Behältern, die in den Stapeln gestapelt sind, wobei die Vielzahl von Lasthandhabungsvorrichtungen fernbetätigt werden, um sich seitlich auf dem Gitter über den Lagersäulen zu bewegen, um auf die Behälter durch die Gitterzellen zuzugreifen, wobei jede der Vielzahl von Lasthandhabungsvorrichtungen Folgendes umfasst:

    a) eine Radanordnung (34, 36) zum Führen der Lasthandhabungsvorrichtung auf dem Gitter;
    b) einen Behälteraufnahmeraum (40), der sich über dem Gitter befindet; und
    c) eine Hebevorrichtung (39), die angeordnet ist, um einen einzelnen Behälter von einem Stapel in den Behälteraufnahmeraum zu heben.

**Revendications**

1. Structure d'ossature de grille (14) pour supporter un dispositif de manipulation de charge (30) opérationnel pour déplacer un ou plusieurs contenants (10), ladite structure d'ossature de grille comprenant :

    une pluralité d'éléments verticaux (16) agencés pour former une pluralité d'emplacements verticaux pour un ou plusieurs contenants devant être guidés par l'élément vertical dans une direction verticale,
    dans laquelle la pluralité d'éléments verticaux (16) sont interconnectés pour définir des nœuds (52) au niveau de leurs extrémités supérieures par une pluralité d'éléments de grille (18, 20) agencés selon un motif de grille, les éléments de grille comprenant un premier ensemble d'éléments de grille (18) s'étendant dans une première direction et un second ensemble d'éléments de grille (20) s'étendant dans une seconde direction, le second ensemble d'éléments de grille s'étendant transversalement par rapport au premier ensemble d'éléments de grille dans un plan sensiblement horizontal pour former une structure de grille (50) comprenant une pluralité de cellules de grille (42),
    la structure de grille (50) comprenant un système de piste positionné sur la pluralité d'éléments de grille, le système de piste comprenant une pluralité de pistes (22a, 22b) agencées selon le motif de grille,
    la structure de grille (50) comprenant une première région (80) et une seconde région (82),
    dans laquelle la structure d'ossature de grille comprend en outre un ensemble de joint de pontage agencé sous la forme d'une ou plusieurs connexions entre la première région de la structure de grille et la seconde région de la structure de grille,

**caractérisée en ce que** ledit ensemble de joint de pontage comprend au moins un fusible mécanique (90) qui est agencé pour se rompre sous une charge appliquée supérieure ou égale à une charge prédéterminée, ladite charge prédéterminée étant inférieure à la charge pour rompre les interconnexions entre la pluralité d'éléments verticaux et la pluralité d'éléments de grille (18, 20) de la structure de grille (50) de manière à permettre à la première région de la structure de grille de se séparer de la seconde région de la structure de grille lorsque la charge appliquée dépasse la charge prédéterminée.

2. Structure d'ossature de grille (14) selon la revendication 1, dans laquelle le au moins un fusible mécanique (90) comprend au moins une broche de cisaillement (146) qui est configurée pour se rompre lorsque la charge appliquée dans une direction parallèle à la première ou à la seconde direction dépasse la charge prédéterminée.

3. Structure d'ossature de grille (14) selon la revendication 1 ou 2, dans laquelle l'ensemble de joint de pontage (88) est configuré pour connecter les extrémités d'éléments de grille adjacents dans la structure de grille (50).

4. Structure d'ossature de grille (14) selon la revendication 3, dans laquelle l'ensemble de joint de pontage (88) comprend au moins un étrier (92) qui est agencé pour connecter les extrémités d'éléments de grille adjacents par l'intermédiaire d'une pluralité de fixations, et dans laquelle au moins une certaine de la pluralité de fixations comprend le au moins un fusible mécanique (90) de telle sorte que l'étrier (92) est agencé pour se séparer d'au moins une certaine extrémité des éléments de grille adjacents lorsque la charge appliquée sur le au moins un fusible mécanique dépasse la charge prédéterminée ; et, facultativement, l'ensemble de joint de pontage (88) comprend au moins un palier coulissant (104) qui est agencé pour coopérer avec une fente (102) dans l'étrier et/ou la au moins une certaine extrémité des éléments de grille adjacents dans une zone de jonction où le au moins un étrier est agencé pour chevaucher la au moins une certaine extrémité de l'élément de grille adjacent de manière à permettre au au moins un étrier et à la au moins une certaine extrémité des éléments de grille adjacents de coulisser l'un par rapport à l'autre.

5. Structure d'ossature de grille (14) selon la revendication 4, dans laquelle le au moins un étrier (92) comprend un premier et un second étriers agencés sur des côtés opposés de la au moins une certaine extrémité des éléments de grille adjacents.

6. Structure d'ossature de grille (14) selon l'une quelconque des revendications précédentes, dans laquelle l'ensemble de joint de pontage (88) est agencé pour connecter au moins un de la pluralité d'éléments verticaux (16) à au moins un de la pluralité d'éléments de grille ; et, facultativement, l'ensemble de joint de pontage comprend une plaque de couvercle (158), ladite plaque de couvercle (158) étant en forme de croix ayant quatre parties de connexion pour se connecter à des éléments de grille séparés dans la structure de grille et dans laquelle au moins une des quatre parties de connexion est connectée à un élément de grille par le au moins un fusible mécanique.

7. Structure d'ossature de grille (14) selon l'une quelconque des revendications précédentes, dans laquelle l'ensemble de joint de pontage (88) comprend en outre un joint de dilatation comprenant un premier élément de piste (106) et un second élément de piste (108), un élément de pontage (110) s'étendant à travers les extrémités des premier et second éléments de piste (106, 108) de manière à fournir une surface de piste continue s'étendant longitudinalement dans la première ou la seconde direction à travers les extrémités des premier et second éléments de piste ; facultativement, l'élément de pontage (110) présente une première extrémité fixée au premier élément de piste (106) et une seconde extrémité mobile par rapport au second élément de piste (108) ;
facultativement, la seconde extrémité de l'élément de pontage (110) est configurée pour être reçue dans un évidement mis en forme de manière correspondante (108b) dans le second élément de piste ; facultativement, la seconde extrémité de l'élément de pontage (110) est agencée pour chevaucher le second élément de piste (108) ; facultativement, l'élément de pontage (110) comprend en outre un élément de guidage contraint à coulisser le long d'une rainure dans le second élément de piste (108) ; et, facultativement, l'ensemble de joint de pontage (88) comprend en outre un support agencé pour supporter l'élément de pontage dans une zone de jonction entre les extrémités des premier et second éléments de piste.

8. Structure d'ossature de grille (14) selon l'une quelconque des revendications précédentes, dans laquelle la première région (80) de la structure de grille est agencée sur un niveau de mezzanine.

9. Structure d'ossature de grille (14) selon l'une quelconque des revendications précédentes, dans laquelle la première région de la structure de grille comprend un ou plusieurs ports à travers lesquels des contenants de stockage peuvent être transférés hors et/ou dans la structure d'ossature de grille.

10. Structure d'ossature de grille (14) selon les revendications précédentes, dans laquelle au moins une partie de la pluralité d'éléments verticaux (16) sont agencés pour former une pluralité de colonnes de stockage verticales pour un ou plusieurs contenants de stockage à empiler entre la au moins une partie de la pluralité d'éléments verticaux ; et, facultativement, la seconde région (82) de la structure de grille est agencée au-dessus de la au moins une partie de la pluralité d'éléments verticaux (16) formant la pluralité de colonnes de stockage verticales.

11. Structure d'ossature de grille (14) selon la revendication 10, dans laquelle la pluralité d'éléments verticaux comprend un premier et un second ensemble d'éléments verticaux (16a, 16b), la au moins une partie de la pluralité d'éléments verticaux définissant le second ensemble d'éléments verticaux (16b) de telle sorte que la première région de la structure de grille soit agencée au-dessus du premier ensemble d'éléments verticaux ; et, facultativement, la longueur du premier ensemble d'éléments verticaux (16a) est différente du second ensemble d'éléments verticaux (16b).

12. Structure d'ossature de grille (14) selon l'une quelconque des revendications précédentes, dans laquelle la pluralité d'éléments de grille comprend une pluralité d'éléments de grille d'un premier type agencés selon le motif de grille pour définir la première région de la structure de grille et une pluralité d'éléments de grille d'un second type agencés dans le motif de grille pour définir la seconde région de la structure de grille, le premier type d'éléments de grille étant différent du second type d'éléments de grille ; et, facultativement, chaque élément de grille de la pluralité des éléments de grille du second type présente une résistance à la flexion supérieure à celle de chaque élément de grille de la pluralité d'éléments de grille du premier type.

13. Système de stockage et de récupération (1), comprenant :

i) une structure d'ossature de grille (14) telle que définie dans l'une quelconque des revendications 1 à 12 ;
ii) une pluralité de piles de contenants (10) agencées dans des colonnes de stockage situées sous la grille, dans lequel chaque colonne de stockage est située verticalement sous une cellule de grille ;
iii) une pluralité de dispositifs de manipulation de charge (30) pour soulever et déplacer des contenants empilés dans les piles, la pluralité de dispositifs de manipulation de charge étant actionnée à distance pour se déplacer latéralement sur la grille au-dessus des colonnes de stockage pour accéder aux contenants à travers les cellules de grille, chacun de ladite pluralité de dispositifs de manipulation de charge comprenant :

a) un ensemble de roues (34, 36) pour guider le dispositif de manipulation de charge sur la grille ;
b) un espace de réception de contenant (40) situé au-dessus de la grille ; et
c) un dispositif de levage (39) agencé pour soulever un contenant unique depuis une pile jusque dans l'espace de réception de contenant.

FIG. 1

(PRIOR ART)

FIG. 2
(PRIOR ART)

FIG. 3

(PRIOR ART)

# FIG. 4
## (PRIOR ART)

(a)

(b)

FIG. 5

(PRIOR ART)

FIG. 6

FIG. 7

FIG. 8a

FIG. 8b

FIG. 9

EP 4 405 278 B1

FIG. 10

FIG. 11

FIG. 12

FIG. 13

FIG. 14

FIG. 15

EP 4 405 278 B1

FIG. 16

FIG. 17

FIG. 18

FIG. 19

FIG. 20

FIG. 21

FIG. 22

(a)

(b)

# FIG. 23

FIG. 24

FIG. 25

FIG. 26

FIG. 27

FIG. 28

FIG. 29

FIG. 30

FIG. 31

FIG. 32

FIG. 33

FIG. 34

FIG. 35

**FIG. 36**

**FIG. 37**

FIG. 38

FIG. 39

FIG. 40

FIG. 41

(a)

(b)

FIG. 42

FIG. 43

FIG. 44

FIG. 45

FIG. 46

FIG. 47

FIG. 48

FIG. 49

FIG. 50

220

232

206

230

208

234

FIG. 51

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015185628 A
- WO 2018146304 A
- WO 2020074257 A
- WO 2015019055 A
- WO 2019238702 A
- GB 2524383 A
- WO 2019101367 A